# EUROPÄISCHE PATENTSCHRIFT

(11) **EP 0 676 534 B1**
(45) Veröffentlichungstag und Bekanntmachung des Hinweises auf die Patenterteilung: **05.08.1998**
(21) Anmeldenummer: 95810243.6
(22) Anmeldetag: 10.04.1995
(51) Int. Cl.: F01N 3/28

(54) **Katalysatormittel für die katalytische Behandlung von Abgas, Katalysator und Verfahren zur Herstellung der Katalysatormittel**
Catalyst means for the catalytic treatment of exhaust gases, catalytic converter and manufacturing method of the catalyst means
Moyen catalytique pour le traitement catalytique de gaz d'échappement, catalyseur et procédé de fabrication du moyen catalytique

(30) Priorität: 11.04.1994 CH 1064/94
(43) Veröffentlichungstag der Anmeldung: 11.10.1995
(73) Patentinhaber: SCAMBIA INDUSTRIAL DEVELOPMENTS AKTIENGESELLSCHAFT, FL-9494 Schaan (LI)
(72) Erfinder: Steenackers, Pieter D., Dr., B-3030 Heverlee (BE); Alexnat, John W. Jörg, B-3724 Vliermaal (BE)
(74) Vertreter: Eder, Carl E.

(56) Entgegenhaltungen:
- EP-A- 0 419 906
- WO-A-93/21431
- FR-A- 2 617 903
- GB-A- 2 062 487
- US-A- 3 713 281
- US-A- 4 248 297
- ENGINEERING, Bd. 233, Nr. 10, November 1993 LONDON, GB, Seiten 7-9, XP 000422152 'Catalytic converters'

## Beschreibung

Die Erfindung betrifft Katalysatormittel für die katalytische Behandlung von Abgas. Solche zum Einbau in ein Gehäuse eines Katalysators vorgesehener Katalysatormittel werden häufig auch als Substrat des Katalysators bezeichnet.

Die Katalysatormittel besitzen Durchgänge für das Abgas und sind insbesondere vorgesehen, um von einem Benzin-Verbrennungsmotor oder eventuell einem anderen Verbrennungsmotor erzeugtes, die Durchgänge durchströmendes Abgas durch eine katalytische Behandlung zu reinigen und/oder zu entgiften, d.h. von Schadstoffen zu befreien, indem diese durch eine chemische Reaktion umgewandelt werden. Der Verbrennungsmotor kann beispielsweise zu einem Automobil oder sonstigen Motorfahrzeug gehören oder für den stationären Betrieb - etwa zum Antreiben eines Notstrom-Generators - dienen.

Bekannte Katalysatormittel bzw. Substrate besitzen ein Paket von stellenweise aneinander anliegenden, zusammen Durchgänge begrenzenden Blechelementen. Diese sind mit Uberzügen versehen, welche Aluminiumoxid und auf dieses aufgebrachtes, katalytisch aktives Material aufweisen, das aus mindestens einem Edelmetall besteht. Die Blechelemente werden durch Haltemittel zusammengehalten.

Aus der EP-A 0 419 906 bekannte Katalysatormittel besitzen ein Paket von rechteckförmigen Blechelementen mit gewellten, streifenförmigen und ebenen Abschnitten. Die Wellen jedes Blechelements bilden ein Fischgrätenmuster, wobei einige der Wellen in die ebenen Abschnitte enden. Die ebenen Abschnitte sind mit Aufbauten aus Hartlot und eventuell zusätzlich mit angeschweissten Stahlstreifen versehen. Jedes sich nicht an einem Ende des Pakets befindende Blechelement ist bei beiden einander abgewandten Flächen seiner ebenen Abschnitte durch die Aufbauten in Abstand von ebenen Abschnitten der beiden benachbarten Blechelemente gehalten. Die Blechelemente sind derart angeordnet, dass die Wellen nicht ineinander eingreifen.

Wenn ein Katalysator in ein Automobil eingebaut ist, entstehen bei der Benutzung des letzteren auf die Katalysatormittel einwirkende Vibrationen, Beschleunigungen und harte, schlagartige Stösse. Zudem werden die Katalysatormittel beim Betrieb durch das Abgas erhitzt und danach wieder abgekühlt, wobei örtliche Temperaturunterschiede entstehen und die Abmessungen der verschiedenen Teile abhängig von der lokalen Temperatur ändern.

Bei den aus der EP-A 0 419 906 bekannten Katalysatormitteln berühren sich die gewellten Abschnitte der einander benachbarten Blechelemente nicht oder möglicherweise höchstens bei Kreuzungspunkten von Wellenscheiteln. Die beim Betrieb entstehenden thermisch bedingten Abmessungsänderungen der Katalysatormittel sowie die auf diese einwirkenden Vibrationen und stossartigen Beschleunigungen können daher nach kurzer Zeit bleibende Verformungen der Blechelemente verursachen. Solche Verformungen können zur Folge haben, dass stellenweise Löcher entstehen, die viel grössere Querschnittsabmessungen als die ursprünglich vorhandenen Durchgänge haben und die katalytische Wirkung der Katalysatormittel stark verkleinern oder sogar praktisch völlig aufheben. Wenn sich die einander benachbarten Blechelemente bei der gekreuzten Anordnung der Wellen möglicherweise bei den Kreuzungspunkten der Wellenscheitel berühren, können zudem bei den Berührungspunkten vorübergehend sehr grosse sowie teilweise schlagartig ändernde Druckkräfte auftreten und zur Folge haben, dass die aus Aluminiumoxid und katalytisch aktivem Material bestehenden Überzügen absplittern. Des weiteren verursacht das Aufbringen von Hartlot auf die ebenen Blechelement-Abschnitte viel Arbeit. Zudem begrenzt jedes Paar von einander gegenüberstehenden Blechelementen nur zwei Durchgänge, deren Breiten gleich den Breiten der gewellten Abschnitte sind und die höchstens bei allfälligen Berührungspunkten der Wellenscheitel geringfügig unterteilt sind. Derart grosse Breiten der Durchgänge reduzieren den Kontakt des durch die Durchgänge strömenden Abgases mit dem auf den Blechelementen vorhandenen katalytisch aktiven Material und damit die Wirksamkeit der Katalysatormittel.

Der Erfindung liegt die Aufgabe zugrunde, Katalysatormittel zu schaffen, die Nachteile der bekannten Katalysatormittel vermeiden. Dabei sollen insbesondere die Blechelemente derart stabil miteinander verbunden werden, dass sie bei der Verwandung nicht durch übermässige Druckkräfte und/oder Bewegungen beschädigt werden. Zudem sollen die Katalysatormittel mit einer grossen Anzahl von Durchgängen pro Flächeneinheit und auch kostengünstig herstellbar sein.

Diese Aufgabe wird gemäss der Erfindung gelöst durch Katalysatormittel mit den Merkmalen des Anspruchs 1.

Die Erfindung betrifft auch noch ein Verfahren zur Herstellung von Katalysatormitteln, wobei das Verfahren gemäss der Erfindung die Merkmale des Anspruchs 21 aufweist.

Vorteilhafte Ausgestaltungen der Katalysatormittel und des Verfahrens gehen aus den abhängigen Ansprüchen hervor.

Gemäss der Erfindung besitzen die Katalysatormittel mindestens ein Paket von Blechelementen. Es kann zum Beispiel ein Paket vorhanden sein, das in sich geschlossen sowie endlos ist und einen Hohlraum sowie eine Achse umschliesst. Das bzw. jedes Paket kann jedoch stattdessen durch einen Stapel mit zwei Enden gebildet sein.

Hier seien noch die im folgenden verwendeten Begriffe "Halteabschnitt" und "Hauptabschnitt" erläutert. Mit einem Halteabschnitt eines Blechelements ist ein von den anderen Blechelementen und/oder den Distanzelementen festgehaltener Abschnitt eines Blechelementes gemeint, der mindestens bei einem sich nicht an einem Ende eines Pakets befindenden Blechelement an einem Distanzelement anliegt. Ein sich an einem Ende eines Pakets von Blechelementen befindendes Blechelement besitzt ebenfalls mindestens einen festgehaltenen Halteabschnitt, der aber eventuell nicht an einem Distanzelement, sondern nur an einem Halteabschnitt eines anderen Blechelementes anliegt und also direkt oder mindestens über einen Halteabschnitt eines anderen Blechelementes fest mit einem Distanzelement verbunden ist.

Unter einem "Hauptabschnitt" eines Blechelements wird ein Abschnitt eines Blechelementes verstanden, der an Durchgängse angrenzt und weder an einem Distanzelement noch an einem Halteabschnitt eines anderen Blechelementes anliegt.

Bei den erfindungsgemässen Katalysatormittel halten die Distanzelemente jeden Halteabschnitt jedes Blechelements separat oder zusammen mit einem Halteabschnitt eines benachbarten Blechelementes in einem definierten Abstand von einem Halteabschnitt eines anderen Blechelementes. Ferner bildet eine Reihe von Distanzelementen zusammen mit den dieser Reihe zugeordneten Halteabschnitten der Blechelemente quasi einen sich durch das ganze Paket von Blechelementen erstreckenden, kompakten Teil-Körper der Katalysatormittel. Die Distanzelemente verbinden daher die Blechelemente stabil miteinander und gewährleisten, dass die zusammen Durchgänge begrenzenden Hauptabschnitte der Blechelemente bei der Benutzung der Katalysatormittel in einem Katalysator nie übermässig gegeneinander gedrückt werden und sich nicht oder höchstens ganz geringfügig - nämlich innerhalb der durch ihre Deformierbarkeit festgelegten Grenzen - bewegen.

Die Hauptabschnitte der Blechelemente besitzen beispielsweise einen inneren Bereich oder Kernbereich aus einem metallischen Material, nämlich aus einem Stahl, der zusätzlich zu Eisen ungefähr 20 Gew.% Chrom, ungefähr 5 Gew.% Aluminium und eventuell noch ein wenig Lanthan und/oder Yttrium enthält. Die an die Durchgänge angrenzenden Flächenabschnitte der Blechelemente weisen vorzugsweise einen Überzug auf. Dieser besitzt einen rauhen, porösen Teil-Überzug aus einem Metalloxid, nämlich Aluminiumoxid, der häufig als "wash coat" bezeichnet wird und auf den ein katalytisch aktives Material aufgebracht ist. Dieses kann mindestens ein Edelmetall, wie Platin und/oder Rhodium aufweisen. Die Halteabschnitte der Blechelemente sind vorzugsweise blank und überzugsfrei, so dass ihre Oberflächen aus dem gleichen Material wie die inneren Bereiche oder Kernbereiche der Hauptabschnitte der Blechelemente, d.h. aus Stahl bestehen.

Die Dicke des metallischen, inneren Bereiches oder Kernbereiches der Blechelemente beträgt vorzugsweise höchstens 0,1 mm und zum Beispiel ungefähr 0,03 mm bis 0,07 mm. Die Dicke von jedem aus Aluminiumoxid bestehenden Überzug beträgt vorzugsweise höchstens oder ungefähr 0,05 mm. Die aus katalytisch aktivem Material bestehenden Schichten oder Überzüge sind vorzugsweise wesentlich dünner als die unbeschichteten Blechelemente sowie als die Aluminiumoxid-Überzüge und können möglicherweise auch Lücken aufweisen. Die gesamte Dicke eines bei beiden Flächen mit Aluminiumoxid und katalytisch aktivem Material versehenen Abschnittes eines Blechelementes kann dann vorzugsweise höchstens 0,3 mm und noch besser höchstens 0,2 mm betragen.

Der bzw. jeder mit Wellen versehene Hauptabschnitt eines Blechelementes kann beispielsweise eine ebene Mittelfläche definieren, die zwischen den Scheiteln der Wellen hindurch verläuft. Die zweiten Blechelemente können dann mindestens im wesentlichen - d.h. abgesehen von allfälligen, durch den Druck der ersten Blechelemente verursachten, elastischen Deformationen und abgesehen von allfälligen Übergängen zwischen den beschichteten Hauptabschnitten und unbeschichteten Halteabschnitten - eben sein. Jedes Blechelement definiert dann zwei Schmiegeebenen, von denen sich jede an eine der Flächen des Blechelements anschmiegt. Bei den ersten, Wellen aufweisenden Blechelementen schmiegen sich die Schmiegeebenen an die Wellenscheitel an. Bei den im wesentlichen ebenen, zweiten Blechelementen schmiegen sich die Schmiegeebenen an die ebenen Flächen an.

Es ist jedoch auch möglich, dass der Hauptabschnitt von mindestens einigen der ersten Blechelemente eine zwischen den Wellenscheiteln hindurch verlaufende Mittelfläche definiert, die mindestens zum Teil gebogen ist. Die zweiten Blechelemente können dann ebenfalls mindestens zum Teil glatt gebogen und mindestens annhähernd parallel zur Mittelfläche mindestens eines benachbarten ersten Blechelementes sein, so dass die zweiten Blechelemente sich an die Scheitel der Wellen anschmiegen und benachbarte Wellen überbrücken. Die Blechelemente definieren dann keine Schmiegeebenen, sondern sich an ihre Flächen anschmiegende, glatt gebogene Schmiegeflächen, die zum Beispiel im Querschnitt Evolventen bilden.

Die Blechelemente und Distanzelemente werden vorzugsweise derart ausgebildet, dass der maximale Abstand von einander zugewandten Flächenabschnitten der Hauptabschnitte von zwei einander benachbarten, zusammen Durchgänge begrenzenden Blechelementen relativ klein ist. Der vorgängig genannte, maximale Abstand ist gleich der von Wellenscheitel zu Wellenscheitel gemessenen Wellenhöhe abzüglich der Dicke eines ersten Blechelements.

Die zwischen einander abgewandten, beschichteten Oberflächen eines ersten Blechelementes von Wellenscheitel zu Wellenscheitel der Wellen gemessene Höhe der Wellen kann abhängig vom Ort variieren und zum Beispiel bei einem hülsen- und/oder ringförmigen Katalysator-Körper von innen nach aussen zunehmen oder überall gleich gross sein. Die genannte Höhe beträgt vorzugsweise mindestens 0,3 mm, vorzugsweise höchstens 2 mm und zum Beispiel höchstens 1,5 mm. Insbesondere wenn die Wellenhöhen überall gleich gross sind, betragen sie vorzugsweise höchstens 1 mm und zum Beispiel ungefähr 0,5 mm. Die Wellenlänge ist vorzugsweise mindestens zweimal und beispielsweise ungefähr dreimal so gross wie die (maximale) Wellenhöhe.

Die kleine Bemessung des genannten, maximalen Abstands und der Höhe der Wellen ermöglicht, dass die Katalysatormittel in einem zu den Durchgängen rechtwinkligen Schnitt eine grosse Anzahl von Durchgängen pro Flächeneinheit aufweisen. Die Katalysatormittel können in einem zu den Durchgängen rechtwinkligen Schnitt beispielsweise mindestens ungefähr 62 Durchgänge pro Quadratzentimeter (d.h. mindestens ungefähr 400 Durchgänge pro Quadratzoll) oder besser mindestens ungefähr 93 Durchgänge pro Quadratzentimeter (d.h. mindestens ungefähr 600 Durchgänge pro Quadratzoll) oder sogar mindestens ungefähr 124 Durchgänge pro Quadratzentimeter, (d.h. mindestens ungefähr 800 Durchgänge pro Quadratzoll) besitzen. Der Schnitt kann dabei in einer Schnittfläche liegen, die abhängig von der Ausbildung der Durchgänge mindestens einen ebenen Teil aufweist und/oder mindestens zum Teil gekrümmt ist.

Wenn der genannte maximale Abstand der einander zugewandten Flächenabschnitte von Blechelement-Hauptabschnitten relativ klein und die Anzahl von Durchgängen pro Flächeneinheit entsprechend hoch ist, gelangt das Abgas bei der Verwendung der Katalysatormittel in intensiven Kontakt mit den Blechelementen. Dies trägt wiederum dazu bei, dass die Katalysatormittel bei einer vorgegebenen Strömungsrate des Abgases nur ein relativ kleines Volumen aufweisen müssen und kostengünstig herstellbar sind. Der genannte maximale Abstand beträgt vorzugsweise höchstens 2 mm, besser höchstens 1,5 mm, vorzugsweise mindestens 0,1 mm und beispielsweise mindestens oder ungefähr 0,3 mm.

Bei der Herstellung der Katalysatormittel kann man zum Beispiel mindestens einen zur Bildung mehrerer erster Blechelemente dienenden, unbeschichteten bandförmigen Blechteil oder mehrere zur Herstellung je eines einzelnen, ersten Blechelementes dienende, unbeschichtete Blechteile durch Kaltverformen - beispielsweise Tiefziehen oder Walzen - mit Erhöhungen versehen. Danach kann man Aluminiumoxid und katalytisch aktives Material auf mindestens einen zur Bildung mehrerer Blechelemente dienenden Blechteil oder auf mehrere Blechteile aufbringen, von denen jeder zur Bildung eines einzigen Blechelementes dient, bevor die Blechelemente zusammen mit Distanzelementen zu Katalysatormitteln zusammengebaut werden. Dies ermöglicht, auch bei einer grossen Anzahl von Durchgängen pro Flächeneinheit und bei entsprechend kleinen Querschnittabmessungen der Durchgänge einwandfreie Überzüge aus Aluminiumoxid und katalytisch aktivem Material zu erzeugen.

Bei einer vorteilhaften Ausgestaltung der Katalysatormittel ist jedes Blechelement in einer Draufsicht und - falls die Blechelemente Schmiegeebenen definieren - in einer zu den Schmiegeebenen rechtwinkligen Projektion viereckförmig, wobei es beispielsweise mindestens zwei gerade zueinander parallelle Ränder hat und zum Beispiel ein im wesentlichen rechtwinkliges oder schiefwinkliges Parallelogramm bildet. Die Blechelemente eines solchen Katalysator-Körpers können derart aus Blechteilen mit mindestens zwei geraden, zueinander parallelen Rändern, zum Beispiel aus viereckigen, d.h. rechteckförmigen oder quadratischen Blechtafeln oder aus Blechbändern mit zueinander zwei parallelen Rändern hergestellt werden, dass kein oder höchstens ein relativ kleiner Blechabfall entsteht. Da das für Katalysatormittel benutzte, vorzugsweise sehr dünne Blech relativ teuer ist, trägt die mindestens weitgehende Vermeidung von Blechabfall zu einer kostengünstigen Herstellung von Katalysatormitteln bei.

Der Erfindungsgegenstand wird anschliessend anhand in der Zeichnung dargestellter Ausführungsbeispiele näher erläutert. In der Zeichnung zeigt
die Fig. 1 eine Schrägansicht von einem Teil von hohlzylindrischen Katalysatormitteln mit ersten und zweiten Blechelementen, von denen jedes aus einem separaten Teil besteht,
die Fig. 2 einen zur Achse rechtwinkligen Querschnitt durch einen Teil der Katalysatormittel,
die Fig. 3 eine vereinfachte Ansicht eines Abschnitts der Katalysatormittel in radialer Blickrichtung auf die äussere Mantelfläche der Katalysatormittel,
die Fig. 4 eine der Fig. 3 entsprechende Ansicht eines Abschnitts von andern Katalysatormitteln, bei denen die Blechelemente aus zusammenhängenden Abschnitten eines einstückigen Bandes bestehen,
die Fig. 5 eine Schrägansicht von hohlzylindrischen Katalysatormitteln, deren Blechelemente in axialer Ansicht evolventenförmig gekrümmt sind,
die Fig. 6 einen zur Achse rechtwinkligen Querschnitt durch einen Bereich der in der Fig. 5 ersichtlichen Katalysatormittel,
die Fig. 7 einen Axialschnitt durch einen Katalysator mit hülsenförmigen Katalysatormitteln,
die Fig. 8 eine Schrägansicht von Katalysatormitteln mit der Form einer im Querschnitt abgeflachten Hülse,
die Fig. 9 teils in axialer Ansicht und teils im Schnitt gezeichnete Katalysatormittel mit mehreren um die Achse herum verteilten Paketen von Blechelementen,
die Fig. 10 einen Längsschnitt durch einen Katalysator mit zwei V-förmig angeordneten Paketen von Blechelementen,
die Fig. 11 einen Längsschnitt entland der Linie XI-XI der Fig. 10 durch den in der letzteren ersichtlichen Katalysator,
die Fig. 12 einen Querschnitt entlang der Linie XII-XII der Fig. 10 durch den in dieser ersichtlichen Katalysator,
die Fig. 13 eine Schrägansicht von einem Paket von Blechelementen des in den Figuren 10 bis 12 gezeichneten Katalysators,
die Fig. 14 einen Längsschnitt durch einen Katalysator mit vier Paketen von Blechelementen,
die Fig. 15 eine vereinfachte Schrägansicht der Katalysatormittel des in der Fig. 14 gezeichneten Katalysators,
die Fig. 16 eine Ansicht der Katalysatormittel gemäss der Fig. 15 in der in dieser durch den Pfeil XVI bezeichneten Blickrichtung, wobei auch noch der Mantel des Gehäuses dargestellt ist,
die Fig. 17 einen Querschnitt durch die in den Figuren 14 bis 16 ersichtlichen Katalysatormittel und
die Fig. 18 eine Ansicht der in den Figuren 14 bis 17 ersichtlichen Katalysatormittel in der in der Fig. 15 durch den Pfeil XVIII bezeichneten Blickrichtung.

Es sei noch angemerkt, dass verschiedene Figuren stark schematisiert und nicht-massstäblich sind. Die Blechelemente sind zum Beispiel häufig im Vergleich zu ihren Umrissabmessungen übertrieben dick gezeichnet. Desgleichen sind die Wellen - der ersten Blechelemente in vielen Figuren im Vergleich zu den Umrissabmessungen der Katalysatormittel mit stark übertriebenen Grössen gezeichnet. Ferner wurden die mit Überzügen aus Aluminiumoxid und katalytisch aktivem Material versehenen Hauptabschnitte und die vorzugsweise blanken, unbeschichteten Halteabschnitte der Blechelemente zur Vereinfachung gleich dick gezeichnet.

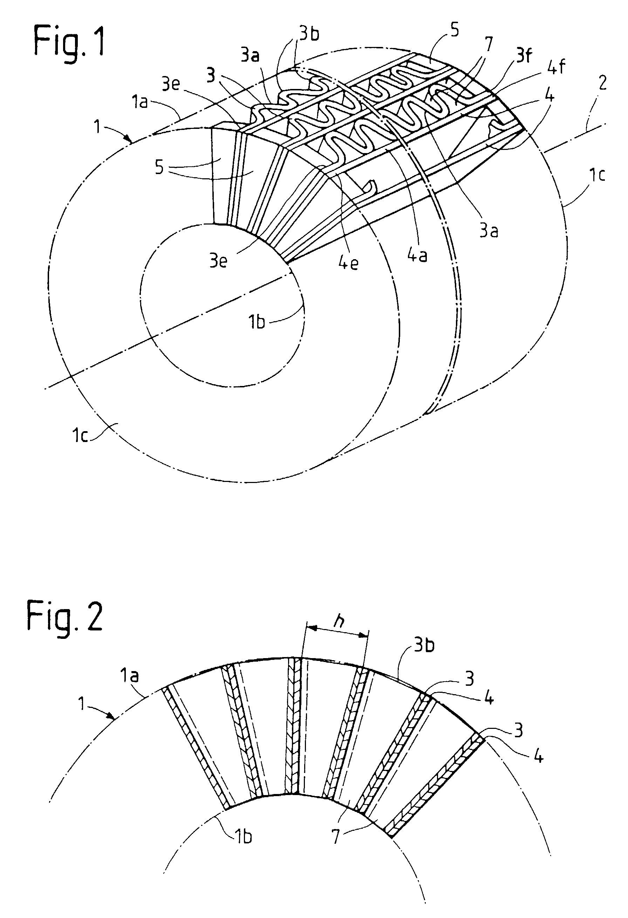

Die in den Figuren 1 bis 3 gezeichneten Katalysatormittel besitzen einen Katalysator-Körper 1, der ring- und/oder hülsenförmig und mindestens im wesentlichen hohlzylindrisch ist. Der Katalysator-Körper 1 definiert eine Achse 2 und hat eine äussere Mantelfläche 1a, eine innere Mantelfläche 1b sowie zwei Endflächen 1c. Die beiden Mantelflächen 1a, 1b sind zur Achse 2 parallel und im Querschnitt mindestens im wesentlichen kreisförmig. Die beiden Endflächen lc sind mindestens im wesentlichen eben und zur Achse sowie zu den Mantelflächen 1a, 1b rechtwinklig.

Der Katalysator-Körper 1 besitzt ein Paket von um die Achse 2 herum angeordneten, entlang seinem Umfang abwechselnd aufeinander folgenden, ersten Blechelementen 3 und zweiten Blechelementen 4. Die Blechelemente 3 und 4 haben einen viereckförmigen, nämlich rechteckförmigen Umriss, könnten aber auch quadratisch sein.

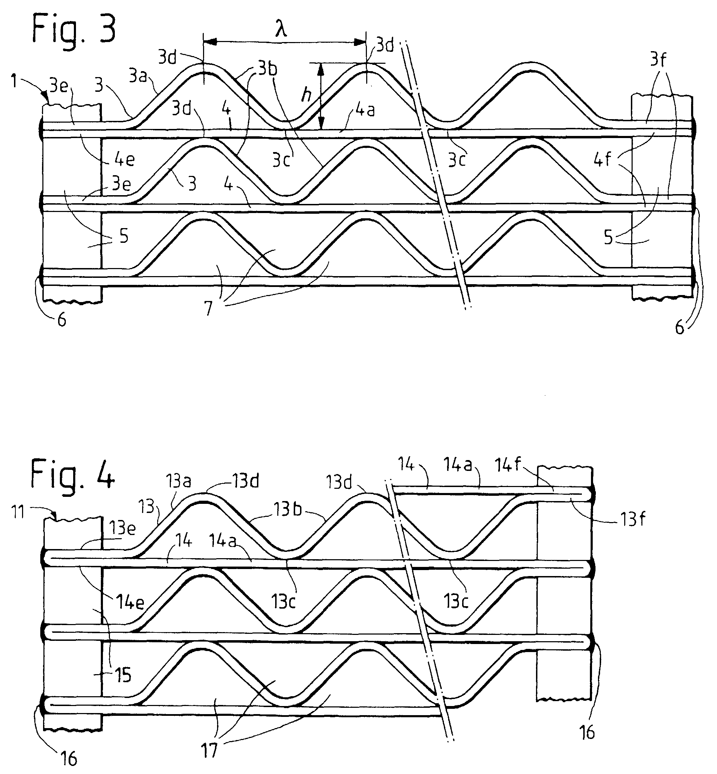

Jedes erste Blechelement 3 besitzt einen den grössten Teil von ihm einnehmenden Hauptabschnitt 3a, der mit Wellen 3b versehen ist. Diese sind gerade sowie parallel zueinander und erstrecken sich radial zur Achse 2 von der äusseren Mantelfläche 1a zur inneren Mantelfläche 1b des Katalysator-Körpers 1. Die Wellen 3b haben sich in der Fig. 3 unten befindende Wellenscheitel 3c und sich in der Fig. 3 oben befindende Wellenscheitel 3d. Jedes erste Blechelement 3 hat bei seinen an einer der beiden Endflächen 1c des Katalysator-Körpers 1 angrenzenden Rändern einen ebenen, streifenförmigen, radialen und also entlang den Wellen 3b des betreffenden Blechelementes verlaufenden Halteabschnitt 3e bzw. 3f.

In den Figuren 2 und 3 ist noch die zwischen einander abgewandten Flächen eines ersten Blechelementes 3 von Wellenscheitel zu Wellenscheitel gemessene Wellenhöhe h bezeichnet. Diese wird dabei zum Beispiel entlang einer Geraden gemessen, die rechtwinklig zur genannten, ebenen Wellen-Mittelfläche des betreffenden Blechelementes 3 ist. Die Wellenhöhe h nimmt von aussen nach innen, d.h. von der äusseren Mantelfläche 1a zur inneren Mantelfläche 1b hin ab. Die in der Fig. 3 mit lambda bezeichnete Wellenlänge - d.h. der parallel zur Achse 2 gemessene Abstand von zwei aneinander unmittelbar benachbarten Wellenscheiteln 3c bzw. 3d - ist aussen und innen gleich gross.

Die zweiten Blechelemente 4 sind mindestens im wesentlichen eben und liegen in durch die Achse 2 verlaufenden Ebenen. Jedes zweite Blechelement 4 hat einen mindestens im wesentlichen ebenen Hauptabschnitt 4a, der dem Hauptabschnitt 3a der beiden ihn unmittelbar benachbarten ersten Blechelemente 3 gegenübersteht. Jedes zweite Blechelement 4 besitzt - ferner zwei selbstverständlich auch ebene, streifenförmige Halteabschnitte 4e bzw. 4f, von denen jeder entlang der Wellen der ihm am nächsten benachbarten, ersten Blechelemente 3 verläuft und an einem Halteabschnitt 3e bzw. 3f von einem der letzteren anliegt.

Jedes Blechelement 3, 4 hat zwei einander abgewandte Flächen, von denen jede einen zum Blechelement-Hauptabschnitt 3a bzw. 4a gehörenden Flächenabschnitt, einen zum Blechelement-Halteabschnitt 3e bzw. 4e und einen zum Blechelement-Halteabschnitt 3f bzw. 4f gehörenden Flächenabschnitt hat. Die inneren Bereiche oder Kernbereiche der Blechelement-Hauptabschnitte 3a, 4a 3, 4 bestehen beispielsweise aus dem in der Einleitung genannten Stahl. Die beiden einander abgewandten Flächenabschnitte des Hauptabschnitts 3a, 4a jedes Blechelementes 3 bzw. 4 sind mit einem Überzug aus Aluminiumoxid versehen, auf den katalytisch aktives Material aufgebracht ist, das beispielsweise Platin und/oder Rhodium aufweist. Die Halteabschnitte 3e, 3f, 4e, 4f der Blechelemente sind vorzugsweise blank und unbeschichtet, so dass ihre Flächenabschnitte aus Stahl bestehen. Da die Halteabschnitte blank und dünner als die Hauptabschnitte 3a, 3b sind, kann sich zwischen den Flächenabschnitten der letzteren und den Flächenabschnitten der Halteabschnitte eine in den Figuren 1 bis 3 nicht gezeichnete Stufe ergeben.

Jedes Blechelement definiert zwei Schmiegeebenen bzw. ebene Schmiegeflächen, von denen sich jede an eine der beiden Flächen des Blechelements 3 bzw. 4 anschmiegt. Die beiden durch ein erstes Blechelement 3 definierten Schmiegeebenen schmiegen sich an die Wellenscheitel 3c bzw. 3d des betreffenden Blechelementes an. Die weiter von den Wellenscheiteln 3d eines Blechelementes 3 entfernten Flächenabschnitte der Halteabschnitte 3e, 3f liegen zum Beispiel mindestens annähernd in der sich an die Wellenscheitel 3c anschmiegenden Schmiegeebene. Die durch ein zweites Blechelement 4 definierten Schmiegeebenen schmiegen sich an die Flächenabschnitte des Hauptabschnitts 4a des betreffenden Blechelements an. Alle Schmiegeebenen sind parallel zur Achse 2 und verlaufen mindestens annähernd durch diese, so dass sie auch mindestens annähernd radial zur Achse 2 sind.

Der Katalysator-Körper 1 besitzt ferner Haltemittel, die zumindest im wesentlichen durch Distanzelemente 5 gebildet sind. Jedes von diesen ist zwischen einem Halteabschnitt 3e bzw. 3f eines ersten Blechelementes 3 und einem Halteabschnitt 4e bzw. 4f eines zweiten Blechelementes 4 angeordnet. Jedes Distanzelement 5 hat zwei einander abgewandte, ebene, zur Achse parallele sowie radiale Flächen, mit denen es an Halteabschnitten 3e, 4e bzw. 3f, 4f anliegt und die in radialer Richtung gleich lang sind wie die Halteabschnitte 3e, 3f, 4e, 4f. Die in der äusseren Mantelfläche la und der inneren Mantelfläche 1b liegenden Flächen jedes Distanzelementes sind beispielsweise eben. Jedes Distanzelement 5 hat ferner zwei ebene, zur Achse 2 rechtwinklige Flächen, von denen die eine mindestens ungefähr bündig mit den radialen Rändern der Blechelemente 3, 4 ist. Die Distanzelemente 5 bestehen aus einem metallischen Material, nämlich Stahl, können jedoch eventuell bei ihren den Wellen 3b zugewandten Flächen auch mit Überzügen aus Aluminiumoxid und katalytisch aktivem Material versehen sein.

Jeder Halteabschnitt 3e, 3f, 4e, 4f eines Blechelements 3 bzw. 4 liegt mit einem ebenen Flächenabschnitt entlang der ganzen Länge eines Blechelement-Randes an einem Distanzelement 5 und mit dem diesem abgewandten Flächenabschnitt an einem Flächenabschnitt des Halteabschnitts eines ihm benachbarten Blechelementes an. Die aneinander anliegenden Halteabschnitte 3e, 4e und 3f, 4f sind paarweise starr miteinander und mit den an ihnen anliegenden Distanzelementen 5 verbunden, nämlich verschweisst. Die in der Fig. 3 schematisch angedeuteten und mit 6 bezeichneten Schweissverbindungen weisen vorzugsweise Schweissnähte auf, die sich entlang der ganzen radialen Abmessungen der Wellen, Halteabschnitte und Distanzelemente erstrecken. Wie noch beschrieben wird, können bei der Herstellung der Katalysator-Körper eventuell vor der Bildung der Schweissnähte auch noch Punktschweissverbindungen gebildet werden.

Die zwischen einander benachbarten Blechelementen 3, 4 angeordneten und diese in Abstand haltenden Distanzelemente 5 sind parallel zur Wellenhöhe h derart bemessen und ferner derart mit den Blechelementen verschweisst, dass der parallel zur Wellenhöhe h gemessene Abstand der einander zugewandten Flächen von zwei entlang dem Umfang des Katalysator-Körpers aufeinanderfolgenden, zweiten Blechelemente 4 gleich der Wellenhöhe h ist. Der ebene Hauptabschnitt 4a jedes zweiten Blechelementes 4 liegt dann mit seinem einen Flächenabschnitt an den Wellenscheiteln 3c und mit seinem andern Flächenabschnitt an den Wellenscheiteln 3d der ihm unmittelbar benachbarten, ersten Blechelemente 3 an und überbrückt diese Wellenscheitel. Zwischen jedem Paar von einander benachbarten und durch ein zweites Blechelement 4 überbrückten Wellenscheiteln 3c bzw. 3d ergibt sich dann ein Durchgang 7 für das Abgas. Die Distanzelemente 5 begrenzen zusammen mit den Blechelementen ebenfalls noch einige Abgas-Durchgänge.

Es sei angemerkt, dass die Distanzelemente 5 derart bemessen und derart mit Blechelementen und miteinander verbunden werden können, dass der parallel zur Wellenhöhe h gemessene Abstand von zwei durch ein Distanzelement miteinander verbundenen Blechelementen 3 und 4 ein wenig kleiner ist als die Wellenhöhe h der ersten Blechelemente 3 in entspanntem Zustand vor dem Zusammenbauen des Katalysator-Körpers 1 war. Die Wellen 3b werden dann beim Zusammenbauen des Katalysator-Körpers 1 ein wenig elastisch deformiert und gespannt, so dass sie mit einer Druckkraft bzw. Vorspannung federnd an den zweiten Blechelementen 4 angreifen.

Die Halteabschnitte 3e, 3f, 4e, 4f und Distanzelemente 5 sind entlang der ganzen Länge der Durchgänge miteinander verbunden. Die an den Halteabschnitten 3e, 4e anliegenden Distanzelemente 5 bilden zusammen eine um die Achse 2 herum verlaufende, in sich geschlossene Reihe. Die an den Halteabschnitten 3f, 4f anliegenden Distanzelemente 5 bilden ebenfalls eine um die Achse 2 herum verlaufende, in sich geschlossene Reihe. Der Katalysator-Körper 1 besitzt also zwei Reihen von Distanzelementen 5. Diese zwei Reihen stehen entlang der Achse 2 und entlang den Flächen der Blechelemente in einem Abstand voneinander der gleich dem axialen Abstand der Halteabschnitte 3e, 4e von den Halteabschnitten 3f, 4f und also wesentlich grösser als die Wellenlänge ist.

Beim fertigen Katalysator-Körper 1 ist jedes erste Blechelement 3 bei beiden sich auf einander abgewandten Seiten des gewellten Hauptabschnitts 3a befindenden Halteabschnitten 3e, 3f direkt sowie unmittelbar mit den an diesen anliegenden Halteabschnitten 4e bzw. 4f eines benachbarten, zweiten Blechelementes 4 und ferner über Distanzelemente 5 mit einem anderen benachbarten, zweiten Blechelement 4 starr verbunden. Dementsprechend ist jeder Halteabschnitt 3e, 3f, 4e, 4f unmittelbar oder mittelbar über mindestens ein Distanzelement 5 mit allen andern sich bei der gleichen Endfläche 1c befindenden Randabschnitten starr und stabil verbunden. Jede der beiden Reihen von Distanzelementen 5 bildet zusammen mit den Halteabschnitten 3e, 4e bzw. 3f, 4f quasi einen kompakten, ringförmigen Teil-Körper des Katalysator-Körpers 1. Ferner halten die Distanzelemente 5 die entlang dem Umfang des Katalysator-Körpers aufeinander folgenden Paare von aneinander anliegenden Halteabschnitten 3e, 4e, bezw. 3f, 4f in durch die Distanzelemente definierten Abständen voneinander. Dementsprechend halten die Distanzelemente 5 die sich entlang dem Umfang des Katalysator-Körpers am nächsten beieinander befindenden ersten Blechelemente 3 in einem durch die Distanzelemente 5 und die Dicken der Halteabschnitte der Blechelemente definierten Abstand voneinander. Analoges gilt selbstverständlich auch für die zweiten Blechelemente 4.

Der Innendurchmesser des Katalysator-Körpers beträgt vorzugsweise mindestens 30 mm und zum Beispiel ungefähr 50 mm. Der Aussendurchmesser des Katalysator-Körpers kann beispielsweise ungefähr doppelt so gross sein wie der Innendurchmesser. Die Länge, d.h. die parallel zur Achse 2 gemessene Abmessung des Katalysator-Körpers 1 ist zum Beispiel grösser als der Aussendurchmesser und kann zum Beispiel 150 mm bis 300 mm betragen. Die zwischen einander abgewandten Oberflächen eines ersten Blechelementes 3 gemessene Wellenhöhe h der Wellen 3b beträgt bei der inneren Mantelfläche 1b vorzugsweise mindestens 0,3 mm sowie beispielsweise ungefähr 0,5 mm. Bei der äusseren Mantelfläche la ist die Wellenhöhe h dann entsprechend dem Durchmesserverhältnis zwischen der äusseren und der inneren Mantelfläche grösser und beträgt zum Beispiel ungefähr 1 mm.

Für die Herstellung von Katalysatormitteln mit Katalysator-Körpern 1 kann man zum Beispiel zuerst durch Zerschneiden einer breiten Blechbahn oder einer viereckigen Blechtafel oder direkt durch Walzen mindestens einen für die Bildung der Blechelemente 3 und mindestens einen für die Bildung der Blechelemente 4 dienenden ebenen, unbeschichteten bandförmigen Blechteil mit parallelen Rändern herstellen. Die Breiten dieser bandförmigen Blechteile oder Blechbänder können zum Beispiel gleich der vorgesehenen radialen Abmessung der Blechelemente sein.

Das zur Bildung der ersten Blechelemente 3 vorgesehene Blechband kann dann zum Beispiel bei den nachher die Hauptabschnitte 3a bildenden Bereichen durch Tiefziehen mit quer zur Bandlängsrichtung verlaufenden Wellen versehen werden. Wie schon geschrieben, ist die Wellenhöhe h bei der äusseren Mantelfläche 1a grösser als bei der inneren Mantelfläche 1b, während die Wellenlänge innen und aussen gleich gross ist. Die Wellen können innen relativ stark S-förmig gebogene Flanken und aussen relativ gerade Flanken haben. Bei den angegebenen Verhältnissen zwischen den Wellenhöhen wird der äussere Rand der ersten Blechelemente 3 dann beispielsweise höchstens 25% oder sogar nur höchstens 10% länger als der innere Rand. Ein solchen Längenunterschied kann beim Formen der Wellen ohne weiteres durch Dehnen des Blechs erreicht werden, ohne dass in den Blechelementen Risse entstehen.

Ferner kann man Distanzelemente 5 herstellen und beispielsweise durch Punktschweissen an ebenen, zur Bildung der Halteabschnitte 3e, 3f vorgesehenen Abschnitten des Blechbandes fixieren.

Die zur Bildung der Hauptabschnitte 3a und 4a der Blechelemente 3 bzw. 4 dienenden Bereiche der Blechbänder werden nun auf beiden Flächen mit einem Aluminiumoxid-Überzug versehen, auf den danach katalytisch aktives Material aufgebracht wird. Dabei wird vorzugsweise weder Aluminiumoxid noch katalytisch aktives Material auf die Halteabschnitte 3e, 3f, 4e, 4f aufgebracht. Analoges gilt auch für die zur Bildung der Distanzelemente 5 dienenden Stahl-Streifen oder mindestens auf deren zum Verschweissen vorgesehenen Flächen.

Anschliessend kann man die Blechbänder zerschneiden, so dass mit Distanzelementen 5 verbundene, erste Blechelemente 3 und zweite Blechelemente 4 entstehen. Die Blechelemente 3, 4 und Distanzelemente 5 werden nun zu einem Katalysator-Körper 1 zusammengesetzt, wobei die Blechelemente 3, 4 bei ihren Halteabschnitten paarweise miteinander sowie mit Distanzelementen 5 verschweisst werden, so dass die bereits erwähnten Schweissnähte entstehen.

Das Herstellungsverfahren kann in verschiedener Weise geändert werden. Beispielsweise kann die Reihenfolge gewisser Verfahrensschritte geändert werden. Beispielsweise könnte man bei der Herstellung der ersten Blechelemente 3 zuerst für jedes von diesen einen separaten, viereckigen Blechteil mit der erforderlichen Grösse von einem Band oder einer Tafel abschneiden und danach jeden dieser Blechteile mit Wellen versehen sowie eventuell mit Distanzelementen verbinden. Das Aluminiumoxid und das katalytisch aktive Material werden jedoch vorteilhafterweise erst dann auf die ersten Blechelemente 3 aufgebracht, wenn deren Hauptabschnitte 3a mit Wellen 3b versehen sind. Ferner sollen die Aluminiumoxid-Überzüge und das katalytisch aktive Material in jedem Fall auf die Blechelemente 3, 4 aufgebracht werden, bevor diese zu einem Katalysator-Körper zusammengebaut werden.

Die Mantelflächen 1a und 1b des Katalysator-Körpers 1 werden durch die an diese Mantelflächen angrenzenden, beispielsweise ebenen Flächen der Distanzelemente 5 und vor allem durch die äusseren bzw. inneren Ränder oder - genauer gesagt - sehr schmalen Randflächen der Blechelemente 3, 4 gebildet und/oder definiert. Die genannten Ränder oder schmalen Randflächen der Blechelemente 3, 4 sind beispielsweise ungefähr eben und/oder bei den gewellten Hauptabschnitten 3a der Blechelemente 3 in axialer Ansicht möglicherweise abhängig von der Formung der Wellen ein wenig in irgend einer Weise gekrümmt. Die Mantelflächen 1a und 1b sind daher eventuell nicht vollkommen, aber doch - wie schon geschrieben - mindestens im wesentlichen zylindrisch und im Querschnitt mindestens im wesentlichen kreisförmig. Die durch die miteinander verschweissten, radialen Ränder der Blechelemente 3, 4 und durch zur Achse 2 rechtwinklige Flächen der Randelemente 5 gebildeten Endflächen 1c des Katalysator-Körpers 1 sind abhängig von der Fabrikationsgenaugikeit und von der Schweissart eventuell nicht vollkommen, aber doch mindestens im wesentlichen eben und zur Achse 2 rechtwinklig. Im übrigen besteht bei der Herstellung die Möglichkeit, den Katalysator-Körper 1 nach dem Verschweissen der Blechelemente 3, 4 und Distanzelemente 5 noch zu schleifen oder einer andern materialabhebenden Nachbearbeitung zu unterziehen, so dass die Mantelflächen la, 1b dann genau zylindrisch und/oder die Endflächen 1c genau eben sind.

Die zum Teil in der Fig. 4 ersichtlichen Katalysatormittel weisen einen beispielsweise ring- und/oder hülsenförmigen Katalysator-Körper 11 auf. Dieser besitzt erste Blechelemente 13, zweite Blechelemente 14 und Haltemittel mit Distanzelementen 15. Jedes erste Blechelement 13 hat einen Hauptabschnitt 13a mit Wellen 13b. Diese haben auf verschiedenen Seiten einer ebenen, axialen, durch die Mitten der Wellenflanken verlaufenden Wellen-Mittelfläche liegende Wellenscheitel 13c bzw. 13d. Jedes erste Blechelement 13 hat auf einander abgewandten Seiten seines Hauptabschnitts 13a einen ebenen, zu den Wellen parallelen Halteabschnitt 13e bzw. 13f. Die Halteabschnitte 13e und 13f befinden sich auf verschiedenen Seiten der erwähnten Wellen-Mittelfläche, so dass ihre einander abgewandten, ebenen Flächen in den sich an die Wellenscheitel 3c bzw. die Wellenscheitel 3d anschmiegenden, ebenen Schmiegeflächen liegen.

Die zweiten Blechelemente 14 sind im wesentlichen eben und haben je einen Hauptabschnitt 14a und zwei sich aufeinander abgewandten Seiten von diesem befindende, zu den Wellen parallele Halteabschnitte 14e bzw. 14f. Jeder Halteabschnitt 13e liegt an einem Halteabschnitt 14e an. Desgleichen liegt jeder Halteabschnitt 13f an einem Halteabschnitt 14f an. Die Blechelemente 13, 14 bestehen alle aus Abschnitten eines einstückigen Blechbandes. Abgesehen von den sich bei den Enden dieses Blechbandes befindenden Halteabschnitten hängt jeder Halteabschnitt 13e mit einem Halteabschnitt 14e und jeder Halteabschnitt 13f mit einem Halteabschnitt 14f zusammen. Die Distanzelemente 15 sind analog angeordnet und durch Schweissverbindungen 16 mit Halteabschnitten 13e, 14e bzw. 13f, 14f verbunden wie die entsprechenden Teile des Katalysator-Körpers 1. Die einander benachbarten Blechelemente 13, 14 begrenzen Durchgänge 17 für das Abgas.

Bei der Herstellung eines Katalysator-Körpers 11 wird ein sowohl zur Bildung von ersten als auch von zweiten Blechelementen 13, 14 dienender, bandförmiger Blechteil, d.h. ein Blechband hergestellt, dessen Breite gleich der gewünschten radialen Abmessung der Blechelemente ist. Dieses Blechband wird dann bei den zur Bildung der Hauptabschnitte 13a dienenden Bereichen mit Wellen versehen. Ferner wird das Blechband zum Beispiel nach dem Befestigen der Distanzelemente 15 und nach dem Aufbringen von Aluminiumoxid sowie katalytisch aktivem Material gefaltet.

Soweit vorgängig nichts anderes geschrieben wurde, ist der Katalysator-Körper 11 ähnlich ausgebildet und wird ähnlich hergestellt wie der Katalysator-Körper 1. Der Katalysator-Körper 11 hat dementsprechend auch ähnliche Eigenschaften wie der Katalysator-Körper 1.

Statt alle Blechelemente 13, 14 des Katalysator-Körpers 11 aus einem einzigen einstückigen Blechband zu bilden, kann man den Katalysator-Körper 11 aus zwei oder mehr einstückigen Bändern herstellen, von denen jedes mehrere Blechelemente des Katalysator-Körpers 11 bildet. Eventuell kann man sogar jedes in der Fig. 4 ersichtliche Blechelement 13, 14 aus einem vor dem Verschweissen separaten Blechstück bilden.

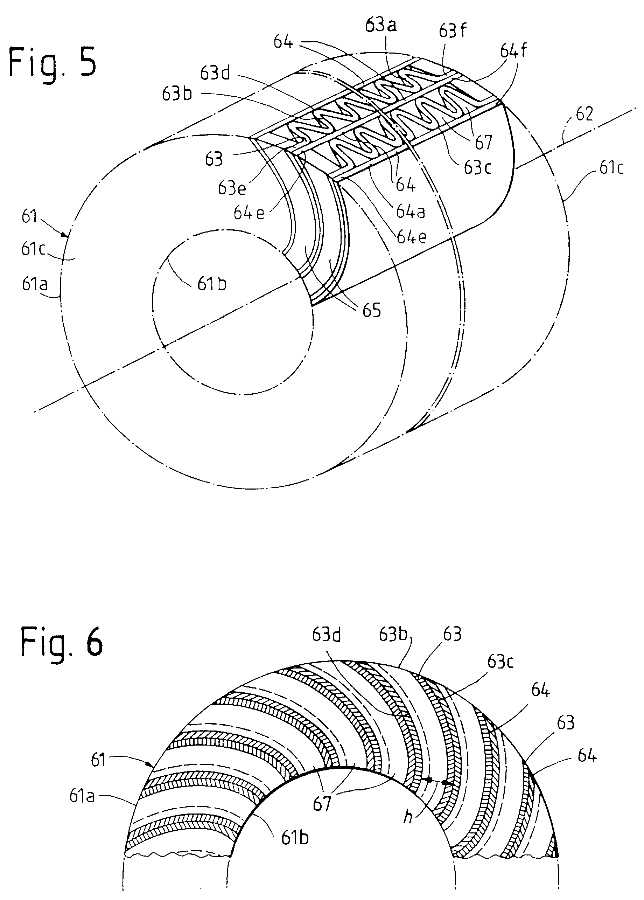

Die schematisch in den Figuren 5 und 6 gezeichneten Katalysatormittel besitzen einen ring- und/oder hülsenförmigen, mindestens im wesentlichen hohlzylindrischen Katalysator-Körper 61. Dieser umschliesst eine Achse 62 und definiert eine äussere Mantelfläche 61a, eine innere Mantelfläche 61b und zwei Endflächen 61c. Die Flächen 61a, 61b, 61c sind analog ausgebildet wie die entsprechenden Flächen des Katalysator-Körpers 1.

Der Katalysator-Körper 61 besitzt erste Blechelemente 63, zweite Blechelemente 64 und Haltemittel mit Distanzelementen 65. Die ersten Blechelemente 63 haben einen Hauptabschnitt 63a mit Wellen 63b. Diese haben bei den Wellentälern Wellenscheitel 63c und bei den Wellenbergen Wellenscheitel 63d. Die Wellen 63b verlaufen entlang von zur Achse 62 rechtwinkligen Ebenen von der äusseren Mantelfläche 61a zur inneren Mantelfläche 61b. Jedes erste Blechelement 63 hat bei seinen an die beiden Endflächen 61c angrenzenden Rändern und also auf einander abgewandten Seiten des Hauptabschnitts 63a einen entlang den Wellen verlaufenden Halteabschnitt 63e bzw. 63f. Die beiden sich an die Wellenscheitel 63c bzw. 63d eines ersten Blechelementes 63 anschmiegenden Schmiegeflächen und die Halteabschnitte 63e, 63f sind in einer zur Achse 62 parallelen Blickrichtung sowie in einem zur Achse 62 rechtwinkligen Querschnitt gekrümmt und bilden nämlich eine Evolvente zur inneren, im Querschnitt kreisförmigen Mantelfläche 61b. In zur Achse 62 parallelen Schnitten sind die genannten Schmiegeflächen und die Halteabschnitte 63e, 63f gerade und parallel zur Achse 62.

Jedes zweite Blechelement 64 hat einen dem Hauptabschnitt 63a der benachbarten, ersten Blechelemente 63 gegenüberstehenden Hauptabschnitt 64a und bei den beiden Endflächen 61c einen Halteabschnitt 64e bzw. 64f. Die zweiten Blechelemente 64 sind wie die genannten Schmiegeflächen in axialer Ansicht sowie in zur Achse 62 rechtwinkligen Querschnitten evolventenförmig und in zur Achse 62 parallelen Schnitten gerade. Die Halteabschnitte 63e, 63f jedes ersten Blechelementes 63 liegen an den Halteabschnitten 64e bzw. 64f eines benachbarten, zweiten Blechelementes 64 an.

Die als Haltemittel dienenden Distanzelemente 65 sind zwischen Halteabschnitten 63e sowie 64e bzw. 63f sowie 64f von einander benachbarten Blechelementen angeordnet und haben in axialer Blickrichtung evolventenförmige und im Axialschnitt gerade Flächen, die an den Halteabschnitten 63e, 64e bzw. 63f, 64f anliegen. Im übrigen können die Distanzelemente 65 analog ausgebildet und angeordnet sein wie es für die Distanzelemente 5 des Katalysator-Körpers 1 anhand der Figuren 1 bis 3 beschrieben wurde. Ferner sind die Halteabschnitte 63e, 64e und 63f, 64f analog wie die entsprechenden Halteabschnitte des Katalysator-Körpers 1 über ihre ganzen Längen durch Schweissverbindungen starr miteinander und mit den an ihnen anliegenden Distanzelementen verbunden.

In der Fig. 6 ist noch die Wellenhöhe h der Wellen 63b eines ersten Blechelementes 63 eingezeichnet. Die Wellenhöhe h ist dabei rechtwinklig zu den sich an die Wellenscheitel 63c bzw. 63d anschmiegenden Schmiegeflächen und rechtwinklig zu einer Wellen-Mittelfläche gemessen, die in der Mitte zwischen den Schmiegeflächen durch die Mitten der Wellenflanken verläuft. Während die Wellenhöhe h beim Katalysator-Körper 1 von innen nach aussen zunimmt, ist sie beim Katalysator-Körper 61 von der inneren Mantelfläche 61b bis zur äusseren Mantelfläche 61a konstant und kann zum Beispiel etwa 0,5 mm bis 1 mm betragen.

Soweit vorgängig nichts anderes angegeben wurde, ist der Katalysator-Körper 61 ähnlich ausgebildet wie der Katalysator-Körper 1 und besitzt auch ähnliche Eigenschaften wie dieser. Bei der Herstellung des Katalysator-Körpers 61 kann man zum Beispiel einen ebenen, bandförmigen Blechteil herstellen, dessen Längsränder nachher beim fertigen Katalysator-Körper 61 die evolventenförmigen Ränder der ersten Blechelemente 63 bilden. Dieser bandförmige Blechteil kann in einem Walzwerk mit ein Wellenprofil aufweisenden Walzen gewalzt und dabei in seinem nachher die Hauptabschnitte 63a der ersten Blechelemente 63 bildenden Bereich mit in der Längsrichtung verlaufenden Wellen versehen werden, während die nachher die Halteabschnitte 63e, 63f bildenden Randbereiche des bandförmigen Blechteils eben bleiben. Der bandförmige Blechteil kann dann zum Beispiel zusammen mit ihm zugeführten, zur Bildung der Distanzelemente 65 dienenden Stahlstreifen bereichsweise zu Evolventen gebogen, stellenweise durch Punktschweissen oder dergleichen mit den genannten Stahlstreifen verbunden und zusammen mit diesen in erste Blechelemente und Distanzelemente zerschnitten werden. Zur Bildung der zweiten Blechelemente 64 kann zum Beispiel ebenfalls ein bandförmiger Blechteil hergestellt, bereichsweise evolventenförmig gebogen und zerschnitten werden. Ferner können die zur Bildung der Hauptabschnitte 63a, 64a der Blechelemente dienenden Blechteile vor oder nach dem evolventenförmigen Biegen sowie Zerschneiden beschichtet und schliesslich zum Katalysator-Körper 61 zusammengebaut werden.

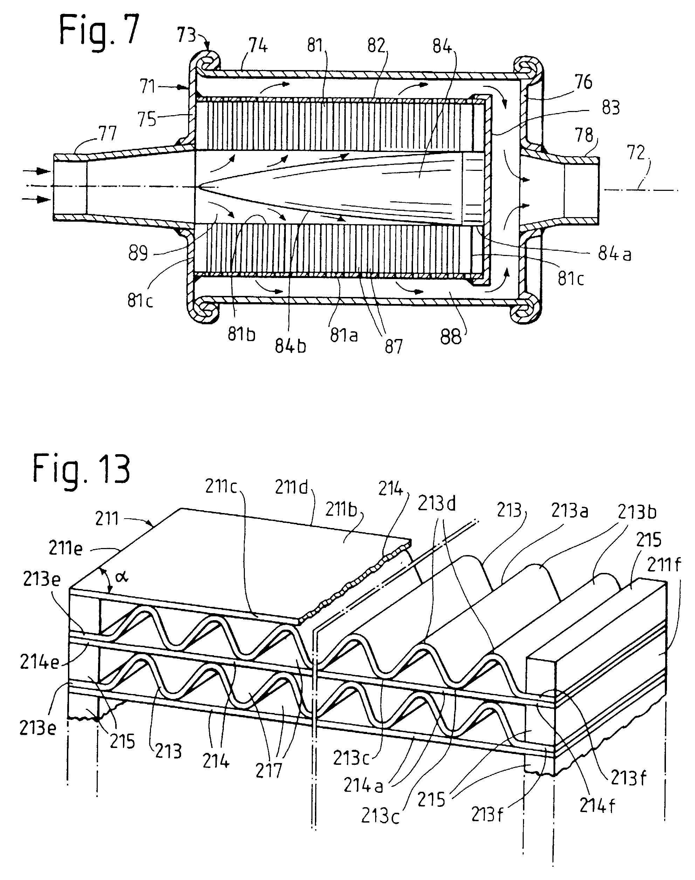

Nun wird anhand der Fig. 7 eine Möglichkeit für die Bildung eines Katalysators 71 mit einem im wesentlichen hohlzylindrischen, hier mit 81 bezeichneten Katalysator-Körper erläutert, der in einer der vorgängig anhand der Figuren 1 bis 6 beschriebenen Arten ausgebildet ist. Der Katalysator 71 hat eine Achse 72 und ein im wesentlichen zu dieser rotationssymmetrisches, metallisches Gehäuse 73 mit einem zylindrischen Mantel 74 und zwei radialen, ebenen Endwänden 75 bzw. 76. Der Mantel 74 und die Endwände 75, 76 sind beispielsweise durch gebördelte Randabschnitte fest und dicht miteinander verbunden. Jede Endwand 75, 76 hat im Zentrum eine Öffnung mit einem nach aussen abgewinkelten Kragen, in den ein zusammen mit der Öffnung als Einlass 77 bzw. Auslass 78 dienender Stutzen eingeschweisst oder eingelötet ist.

Der hülsenförmige Katalysator-Körper 81 hat eine äussere Mantelfläche 81a, eine innere Mantelfläche 81b, zwei Endflächen 81c sowie entlang von zur Achse 72 rechtwinkligen Ebenen verlaufende, radiale oder evolventenförmige Abgas-Durchgänge 87. Der Katalysator-Körper 81 ist bei einer seiner radialen Endflächen 81c beispielsweise durch eine Schweiss- oder Hartlötverbindung dicht an der Endwand 75 befestigt, so dass der Innenraum des Einlasses 77 in den von der inneren Mantelfläche 81b des Katalysator-Körpers 81 umschlossenen Hohlraum mündet. Ferner ist zum Beispiel eine perforierte Hülse 82 vorhanden, die den Katalysator-Körper 81 satt passend oder durch einen schmalen Spalt getrennt umschliesst und an einem Ende durch eine Schweiss- oder Hartlötverbindung an der Endwand 75 befestigt ist. Am anderen Ende der Hülse 82 ist eine beispielsweise durch Schweissen oder Hartlöten mit dieser verbundene Abschlusswand 83 angeordnet. Zwischen dem Mantel 74 des Gehäuses 73 und der Hülse 82 ist ein im Querschnitt ringförmiger Zwischenraum vorhanden, der zusammen mit einem zwischen der Endwand 76 des Gehäuses 73 und der Abschlusswand 83 vorhandenen Zwischenraum einen äusseren Hohlraum 88 bildet. Dieser ist mit dem Innenraum des Auslasses 78 verbunden ist. Zwischen der Abschlusswand 83 und der dieser zugewandeten Endfläche 81c des Katalysator-Körpers 81 ist ein Zwischenraum vorhanden. Im zentralen Bereich der Abschlusswand 83 ist ein beispielsweise hohles, koaxiales, längliches Begrenzungselement 84 an dieser befestigt, das in den von der inneren Mantelfläche 81b umschlossenen Hohlraum hineinragt. Das Begrenzungselement 84 hat einen kurzen, zylindrischen Abschnitt 84a, der satt oder mit höchstens kleinem radialem Spiel in den Endabschnitt des von der inneren Mantelfläche 81b des Katalysator-Körpers 81 umschlossenen Hohlraums hineinragt und den letzteren dort einigermassen dicht, aber derart abschliesst, dass der Endabschnitt des Katalysator-Körpers 81 auf dem zylindrischen Abschnitt 84a gleiten kann. Das Begrenzungselement 84 besitzt ferner einen sich bis ungefähr zu dem an der Endwand 75 befestigten Ende des Katalysator-Körpers 81 erstreckenden, sich zum Einlass 77 hin verjüngenden Abschnitt, der eine zur Achse 77 geneigte, beispielsweise kegelförmige und/oder im Axialschnitt leicht konvex gebogene, etwa parabelförmige Begrenzungsfläche 84b bildet und zusammen mit der inneren Mantelfläche 81b einen freien, inneren Hohlraum 89 begrenzt.

Bei der Benutzung des Katalysators 71 strömt das Abgas durch den Innenraum des Einlasses 77 zuerst in den freien, inneren Hohlraum 89 und danach bei der als Abgas-Eintrittsfläche dienenden, inneren Mantelfläche 81a des Katalysator-Körpers 81 in dessen Durchgänge 87. Das Abgas strömt dann durch die Durchgänge 87 nach aussen, tritt bei der als Abgas-Austrittslfäche dienenden, äusseren Mantelfläche 81a des Katalysator-Körpers 81 aus diesem aus und gelangt durch den äusseren Hohlraum 88 zum Auslass 78. Falls der Katalysator-Körper 81 und die Hülse 82 sich bei der beim Betrieb erfolgenden Erhitzung unterschiedlich ausdehnen, kann sich das dem Einlass abgewandte Ende des Katalysator-Körpers 81 relativ zur Hülse 82 und zum Begrenzungselement 84 ein wenig verschieben.

Eventuell könnte man die Hülse 82 durch eine innerhalb der inneren Mantelfläche 81b angeordnete, perforierte Hülse ersetzen oder die perforierte Hülse 82 ersatzlos weglassen und die Abschlusswand 83 und/oder das Begrenzungselement 84 am Katalysator-Körper 81 befestigen.

Die anhand der Figuren 1 bis 9 beschriebenen Katalysatormittel bzw. Katalysator-Körper bilden im Querschnitt kreisförmige Hohlzylinder. Es kann jedoch aus Platzgründen wünschenswert sein, Katalysatoren mit Gehäusen und Katalysatormitteln vorzusehen, die im Querschnitt nicht kreisförmig sind, sondern flachere Querschnittsformen besitzen.

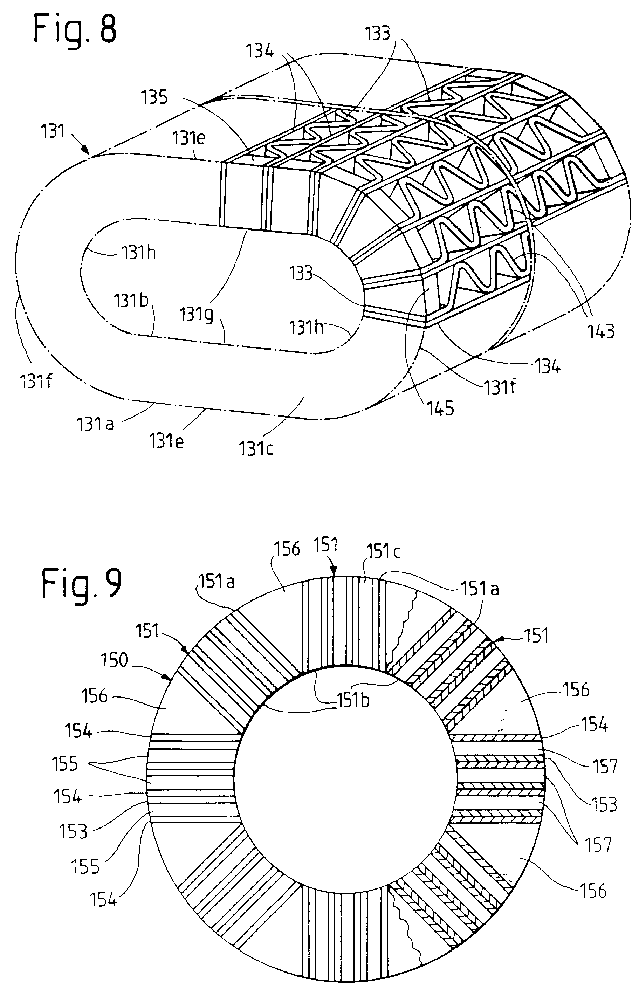

Die in der Fig. 8 ersichtlichen Katalysatormittel besitzen einen hülsenförmigen Katalysator-Körper 131. Dieser bildet etwa einen im Querschnitt abgeflachten Hohlzylinder und hat eine äussere Mantelfläche 131a, eine innere Mantelfläche 131b und zwei Endflächen 131c. Die beiden Mantelflächen sind parallel zu einer nicht gezeichneten Achse und in einem zu dieser Achse rechtwinkligen Querschnitt parallel zueinander. Die beiden Mantelflächen haben im Querschnitt die Form von Rechtecken, deren kürzere Rechteckseiten durch Halbkreise ersetzt sind. Die äussere Mantelfläche 131a hat dementsprechend zwei ebene, zueinander parallele Abschnitte 131e und zwei im Querschnitt gebogene, halbkreisförmige Abschnitte 131f. Die innere Mantelfläche hat zwei ebene, zueinander sowie zu den Abschnitten 131e parallele Abschnitte 131g und zwei im Querschnitt gebogene, halbkreisförmige Abschnitte 131h. Jeder der letzteren ist konzentrisch zu einem der halbkreisförmigen Abschnitte 131f der äusseren Mantelfläche.

Der Katalysator-Körper 131 hat zwei Arten von ersten Blechelementen, die mit 133 und 143 bezeichnet sind. Beide Arten von ersten Blechelementen haben einen Hauptabschnitt mit von der äusseren zur inneren Mantelfläche verlaufenden Wellen und bei zwei Rändern ebene Halteabschnitte. Die einen ersten Blechelemente 133 sind bei den im Querschnitt geraden Abschnitten 131e, 131g der Mantelflächen angeordnet und haben rechtwinklig zu diesen verlaufende, über ihre ganze Länge eine konstante Wellenhöhe aufweisende Wellen. Die anderen ersten Blechelemente 143 sind bei den im Querschnitt halbkreisförmigen Abschnitten, 131f, 131h angeordnet und haben von innen nach aussen zunehmende Wellenhöhen.

Der Katalysator-Körper 131 besitzt ferner zweite Blechelemente 134, die entlang dem ganzen Umfang gleich ausgebildet und nämlich im wesentlichen eben sind. Ferner sind zwei Arten von Distanzelementen 135 bzw. 145 vorhanden. Die bei den im Querschnitt geraden Abschnitten 131e, 131g der Mantelflächen angeordneten Distanzelemente 135 sind in axialer Ansicht von der inneren bis zur äusseren Mantelfläche gleich breit. Dagegen nimmt die Breite der anderen, bei den im Querschnitt gebogenen Abschnitten 131f, 131h der Mantelflächen angeordneten Distanzelemente 145 von innen nach aussen zu.

So weit vorgängig nichts anderes geschrieben wurde, ist der Katalysator-Körper 131 ähnlich ausgebildet, wie der Katalysator-Körper 1. Der Katalysator-Körper 131 kann in ein Gehäuse mit der Form eines im Querschnitt abgeflachten Zylinders eingebaut werden, wobei der Katalysator- Körper analog angeordnet werden kann wie beim Katalysator gemäss der Fig. 7.

Die in der Fig. 9 ersichtlichen Katalysatormittel 150 sind mehr oder weniger hülsen- oder ringförmig, umschliessen eine Achse und besitzen mindestens zwei, zweckmässigerweise mindestens drei, vorzugsweise mindestens sechs und beispielsweise acht um die Achse herum verteilte Katalysator-Körper 151. Jeder von diesen hat eine kreisbogenförmige Aussenfläche 151a, eine kreisbogenförmige Innenfläche 151b und zwei Endflächen 151c. Jeder Katalysator-Körper 151 besitzt ein Paket oder eine Gruppe von aneinander anliegenden, abwechselnd aufeinander folgenden, ersten Blechelementen 153 sowie zweiten Blechelementen 154. Jedes erste Blechelement 153 besitzt einen Hauptabschnitt mit geraden, zueinander parallelen, von der Innenfläche 151b zur Aussenfläche verlaufenden Wellen, die überall die gleiche Höhe haben. Jedes erste Blechelement 153 hat bei seinen an die beiden Endflächen 151c angrenzenden Rändern einen Halteabschnitt. Die zweiten Blechelemente 154 sind im wesentlichen vollständig eben sowie parallel zur Achse und haben also insbesondere auch ebene Halteabschnitte. Die Wellen der zum gleichen Katalysator-Körper 151 bzw. zum gleichen Paket gehörenden ersten Blechelemente 153 und die zweiten zum gleichen Katalysator-Körper 151 bzw. zum gleichen Paket gehörenden Blechelemente 154 sind alle parallel zueinander. Jedes der beiden Enden eines Paketes kann beispielsweise durch ein zweites, ebenes Blechelement 154 gebildet sein.

Die Katalysatormittel 150 weisen Haltemittel mit ersten Distanzelementen 155 und zweiten Distanzelementen 156 auf. Die ersten Distanzelemente 155 bestehen aus einem im Querschnitt rechteckigen oder quadratischen Streifen, der über seine ganze Länge konstante Querschnittsabschmeesungen hat. Die zweiten Distanzelemente 156 sind zum Beispiel in axialer Ansicht etwa kreissektor- oder dreieckförmig.

Mindestens die Halteabschnitte der sich nicht am Ende eines Katalysator-Körpers 151 bzw. Paketes befindenden Blechelemente 153, 154 liegen paarweise aneinander an. Zwischen den aneinander anliegenden Halteabschnitt-Paaren sind erste Distanzelemente 155 angeordnet. Zwischen den Halteabschnitten der die Enden von benachbarten Katalysator-Körper 151 bildenden Blechelementen 154 sind zweite Distanzelemente 156 angeordnet. Die aneinander anliegenden Blechelemente und Distanzelemente sind zum Beispiel durch Schweiss- oder Hartlötverbindungen starr miteinander verbunden.

Die zum gleichen Katalysator-Körper 151 bzw. Paket gehörenden Blechelemente begrenzen zusammen zueinander parallele Durchgänge 157 für das Abgas. Dagegen sind in den Sektoren zwischen den Katalysator-Körpern bzw. Blechelement-Paketen keine Durchgänge vorhanden. Die durch die inneren Ränder der Blechelemente 153, 154 und auch noch durch die Distanzelemente 155, 156 gebildeten Innenflächen 151b bilden zusammen eine in sich geschlossen, abgesehen von den Öffnungen der Durchgänge kompakte und im Querschnitt beispielsweise im allgemeinen wie gezeichnet kreisförmige, innere Mantelfläche. Die Aussenflächen 151a stehen in Abstand voneinander, und definieren zusammen mit den Distanzelementen 156 eine Hüllfläche oder äussere, zylindrische Mantelfläche, die im Querschnitt ebenfalls im allgemeinen kreisförmig sein kann, aber in den Sektoren zwischen den Blechelement-Paketen relativ grosse Löcher hat.

Es ist jedoch anzumerken, dass man zwischen den Katalysator-Körpern 151 nicht nur bei den Rändern der Blechelemente, sondern auch zwischen diesen Rändern noch zweite Distanzelemente 156 vorsehen könnte. Des weiteren könnte man Distanzelemente 156 vorsehen, die sich über die ganze axiale Ausdehnung der Blechelemente erstrecken. Ferner könnten die Mantelflächen im Querschnitt im wesentlichen oval oder polygonal sein.

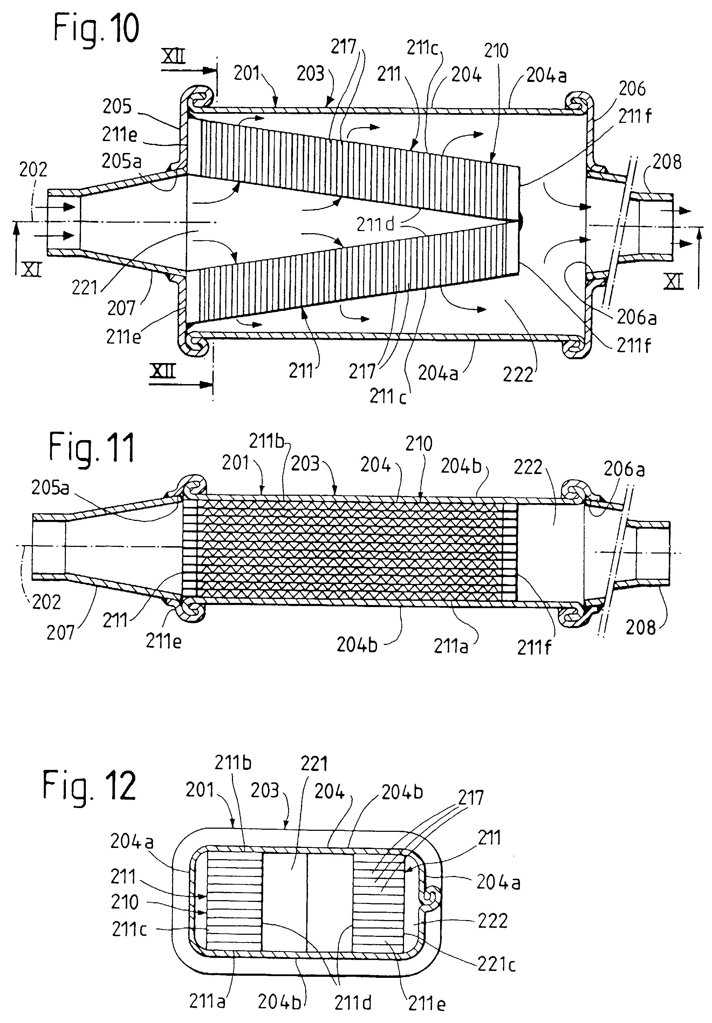

Der in den Figuren 10 bis 12 ersichtliche Katalysator 201 definiert eine Achse 202 und weist ein Gehäuse 203 auf. Dieses hat einen Mantel 204 und zwei Endwände 205, 206. Der Mantel 204 ist parallel zur Achse 202. Der Mantel 204 ist in einem zur Achse rechtwinkligen Querschnitt im wesentlichen rechteckförmig, wobei aber die Ecken des Rechtecks durch gebogene Übergänge ersetzt sind. Der Mantel bildet also zwei Paare von paarweise zueinander parallelen Seiten- oder Längswänden 204a bzw. 204b, wobei die Seiten- oder Längswände 204b breiter sind als die Seiten- oder Längswände 204a. Die Endwände 205, 206 sind eben sowie rechtwinklig zur Achse 202 und haben der Querschnittsform des Mantels entsprechende Umrissformen. Die Ränder der den Mantel 204 und die Endwände 205, 206 bildenden Blechstücke sind beispielsweise durch Bördeln miteinander verbunden.

Jede Endwand 205, 206 besitzt eine durch einen nach aussen ragenden Kragen begrenzte Öffnung 205a bzw. 206a. An jeder Endwand ist ein Stutzen befestigt, nämlich in den Kragen eingeschweisst. Jeder Stutzen hat einen äusseren zylindrischen Abschnitt und einen sich zum Innenraum des Gehäuses hin erweiternden Abschnitt. Die beiden Öffnungen 205a, 206a bilden zusammen mit den Stutzen den Einlass 207 bzw. den Auslass 208 des Katalysators.

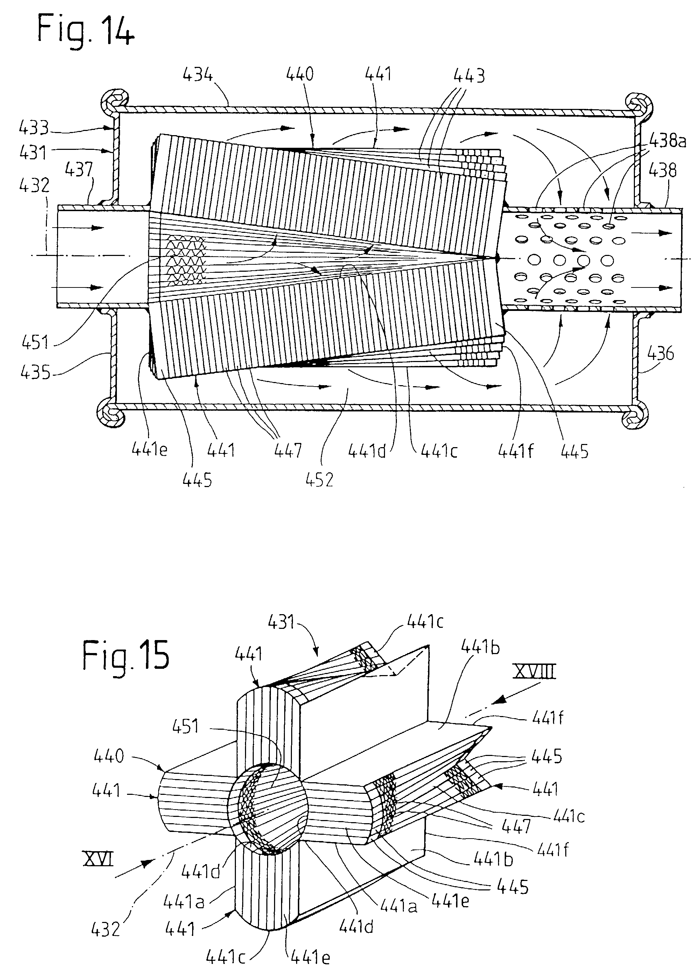

Der Katalysator 201 weist Katalysatormittel 210 mit zwei Katalysator-Körpern 211 auf, von denen einer separat in der Fig. 13 gezeichnet ist. Jeder Katalysator-Körper 211 hat im wesentlichen die Form eines Prismas, dessen Grundfläche 211a und Deckfläche 211b in der Draufsicht ein schiefwinkliges Parallelogramm bildet. Die Grundflächen und Deckflächen der beiden prismenförmigen Katalysator-Körper 211 sind parallel zu den breiteren, Seiten- oder Längswänden 204b des Gehäuses 203 und haben die gleichen Umrissformen wie die Katalysator-Körper in dem in der Fig. 10 gezeichneten Schnitt. Jeder Katalysator-Körper 211 besitzt ferner zwei entlang den längeren Seiten des Parallelogramms verlaufende Seitenflächen 211c, 211d und zwei entlang den kürzeren Prallelogramm-Seiten verlaufende Endflächen 211e, 211f. Die Flächen 211c, 211d, 211e, 211f sind rechtwinklig zur Grundfläche 211a sowie zur Deckfläche 211b. Die Seitenfläche 211c und die Endfläche 211e bilden miteinander einen in der Fig. 13 mit alpha bezeichneten Winkel, der von 90° verschieden ist, mindestens 45°, vorzugsweise mindestens 60° und beispielsweise 75° bis 87° beträgt.

Jeder Katalysator-Körper 211 weist ein Paket von abwechselnd aufeinander folgenden ersten Blechelementen 213 sowie zweiten Blechelementen 214 und Haltemittel mit Distanzelementen 215 auf. Jedes Blechelement und Distanzelement besteht zum Beispiel analog wie bei dem anhand der Figuren 1 bis 3 beschriebenen Katalysator-Körper je aus einem separaten Werkstück. Die Blechelemente 213, 214 haben in einer Draufsicht die gleichen Umrissformen wie die Grundfläche 211a sowie die Deckfläche 211b eines Katalysator-Körpers 211 und bilden also ein schiefwinkliges Parallelogramm.

Jedes erste Blechelement 213 hat einen Hauptabschnitt 213a, der mit Wellen 213b versehen ist, die sich parallel zueinander und parallel zu den Endflächen 211e, 211f von der Seitenfläche 211c zur Seitenfläche 211d erstrecken. Die Wellen 213b haben über ihre ganze Länge eine konstante Wellenhöhe. Jedes erste Blechelement 213 hat auf einander abgewandten Seiten seines Hauptabschnittes 213a und nämlich bei den Endflächen 211e, 211f entlang den Wellen verlaufende, zu diesen parallele, streifenförmige, ebene Halteabschnitte 213e bzw. 213f.

Jedes zweite Blechelement 214 hat einen ebenen Hauptabschnitt 214a und auf einander abgewandten Seiten von diesen, einen streifenförmigen, ebenfalls ebenen Halteabschnitt 214e bzw. 214f. Bei den aufeinander folgenden Blechelementen steht jeweils ein Hauptabschnitt 214a einem Hauptabschnitt 213a gegenüber. Ferner steht jeweils ein Halteabschnitt 214e einem Halteabschnitt 213e und ein Halteabschnitt 214f einem Halteabschnitt 213f gegenüber. Die zu einem Hauptabschnitt gehörenden Flächenabschnitte der beiden Flächen jedes Blechelements 213, 214 sind mit einem Überzug versehen, der Aluminiumoxid und an der freien Oberfläche des Überzugs katalytisch aktives Material aufweist. Die zu den Halteabschnitten gehörenden Flächenabschnitte sind blank, d. h. überzugsfrei. Jedes zweite Blechelement ist mindestens im wesentlichen - d.h. abgesehen von den Stufen zwischen dem mit Überzügen versehenen Hauptabschnitt sowie den überzugsfreien Halteabschnitten und abgesehen von möglicherweise durch die allfällige Vorspannung der Wellen verursachten, kleineren Deformationen - eben.

Jedes Blechelement 213, 214 definiert wiederum zwei Schmiegeebenen, von denen sich jede an eine der Flächen des Blechelements anschmiegt. Die von einem ersten Blechelement 213 definierten Schmiegeebenen schmiegen sich an die Wellenscheitel 213c bzw. 213d an. Die von einem zweiten Blechelement 214 definierten Schmiegeebenen schmiegen sich an die einander abgewandten Flächenabschnitte des ebenen Hauptabschnitts 214a an und fallen mit diesen ebenen Flächenabschnitten zusammen. Im übrigen berühren sich die Hauptabschnitte der einander benachbarten Blechelemente bei den Schmiegeebenen. Die Schmiegeebenen aller Blechelemente 213, 214, die zum gleichen Katalysator-Körper 211 bzw. zum gleichen Paket von Blechelementen gehören, sind parallel zueinander und zur Grundfläche 211a sowie zur Deckfläche 211b des Katalysator-Körpers. Die Grundfläche 211a und die Deckfläche 211b jedes Katalysator-Körpers 211 können beispielsweise je durch ein zweites Blechelement 214 gebildet sein. Der Hauptabschnitt 214a der zweiten Blechelemente 214 liegt dann bei den die Grundfläche oder Deckfläche des Katalysator-Körpers bildenden, zweiten Blechelementen an den Wellenscheiteln eines benachbarten ersten Blechelementes 213 und bei allen anderen zweiten Blechelementen an Wellenscheiteln von zwei benachbarten ersten Blechelementen 213 an.

Jedes Distanzelement 215 besteht aus einem geraden Stück eines im Querschnitt viereckigen Profilstabes. Jeder Katalysator-Körper 211 besitzt zwei gerade, voneinander in Abstand stehende Reihen von Distanzelementen, wobei sich eine dieser Reihen bei den Halteabschnitten 213e, 214e und die andere Reihe bei den Halteabschnitten 213f, 214f befindet. Jeder Halteabschnitt von jedem nicht ein Ende eines Pakets von Blechelementen bildende Blechelement liegt mit einem ebenen Flächenabschnitt an einem Distanzelement und mit einem diesem abgewandten, ebenen Flächenabschnitt an einem ebenen Flächenabschnitt von einem Halteabschnitt eines benachbarten Blechelements an. Wenn man von den die Grundfläche und Deckfläche des Katalysator-Körpers bildenden Blechelementen absieht, liegen also die Halteabschnitte der ersten und zweiten Blechelemente 213, 214 paarweise unmittelbar aneinander an. Mindestens die sich nicht an einem Ende des Pakets befindenden Distanzelemente 215 sind zwischen zwei Halteabschnitten 213e und 214e bzw. 213f und 214f angeordnet. Die aneinander anliegenden Halteabschnitte 213e, 214e, 213f, 214f und Distanzelemente 215 sind analog wie beim anhand der Figuren 1 bis 3 beschriebenen Katalysator-Körper 1 starr miteinander verbunden, zum Beispiel verschweisst. Die aneinander anliegenden Blechelemente 213, 214 begrenzen zusammen Durchgänge 217, die sich wie die Wellen 213b von der Seitenfläche 211c zur Seitenfläche 211d erstrecken.

Die Distanzelemente 215 erstrecken sich entlang der ganzen Länge der Wellen und Durchgänge 217. Ferner bilden die zur gleichen Reihe gehörenden Distanzelemente 215 zusammen mit den mit ihnen verbundenen Halteabschnitten quasi einen platten- und/oder quaderförmigen, kompakten Teil-Körper eines Katalysator-Körpers 211. Die Halteabschnitte 213e, 214e aller zum gleichen Katalysator-Körper gehörenden Blechelemente sind also direkt und/oder über Distanzelemente starr und stabil miteinander verbunden. Analoges gilt für die Halteabschnitte 213f, 214f.

Soweit vorgängig nichts anderes geschrieben wurde, sind die Katalysator-Körper 211 auch sonst analog wie der Katalysator-Körper 1 ausgebildet.

Die beiden Katalysator-Körper 211 sind bei ihren Endflächen 211e an sich in der Fig. 10 auf einander abgewandten Seiten der Mündung des Einlasses 207 befindenden Bereichen der Endwand 205 dicht befestigt, beispielsweise angeschweisst. Die Seitenflächen 211d der beiden Katalysator-Körper sind einander zugewandt und nähern sich in vom Einlass weg verlaufender Richtung aneinander an. Die beiden Katalysator-Körper 211 sind bei ihren dem Einlass 207 abgewandten Endflächen dicht sowie fest miteinander verbunden, beispielsweise direkt und/oder über ein sie verbindendes Verbindungselement verschweisst. Die beiden Katalysator-Körper bilden also in dem in der Fig. 10 gezeichneten Schnitt zusammen ein V. Die Grundflächen 211a und die Deckfläche 211b der Katalysator-Körper liegen beispielsweise gemäss den Figuren 11 und 12 je an einer der beiden breiteren Längswände 204b des Gehäuses 203 an.

Der Innenraum des Einlasses 207 mündet in einen im Gehäuse 203 zwischen den Seitenflächen 211d der beiden Katalysator-Körper 211 vorhandenen inneren Hohlraum 221, der in dem in der Fig. 10 gezeichneten Schnitt entlang der Achse 202 in der vom Einlass wegverlaufenden Richtung schmäler wird. Der Innenraum des Einlasses 207 hat bei seiner in den inneren Hohlraum 221 mündenden Mündung eine ungefähr viereckige Umrissform und ungefähr die gleichen Umrissabmessungen wie das sich näher beim Einlass befindende Ende des inneren Hohlraumes 221. Zwischen den Längswänden 204a des Gehäuses und den diesen zugewandten Seitenflächen 211c der Katalysator-Körper sind Zwischenräume vorhanden, die zusammen mit einem zwischen der Endwand 206 des Gehäuses und den Endflächen 211f der Katalysator-Körper vorhandenen Zwischenraum einen äusseren Hohlraum 222 bilden, der mit dem Innenraum des Auslasses 208 verbunden ist. Der Auslass 208 ist beispielsweise gleich wie der Einlass ausgebildet, könnte aber statt einer viereckigen in den äusseren Hohlraum 222 mündenden Mündung eine kreisförmige Mündung haben.

Bei der Herstellung der Katalysator-Körper 211 kann man zum Beispiel mindestens einen zur Bildung der ersten Blechelemente diendenden, ebenen, bandförmigen Blechteil - d.h. ein Blechband - herstellen, dessen zueinander parallelen Ränder nachher an die Endflächen 211e bzw. 211f eines Katalysator-Körpers angrenzen. Der nachher zur Bildung des Hauptabschnitts 213a von Blechelementen dienende, innere Bereich des Blechbandes kann in einer Walzvorrichtung mit profilierten Walzen durch Kaltverformen mit in seiner Längsrichtung verlaufenden Wellen versehen werden. Die nachher die Halteabschnitte 213e, 213f bildenden Randbereiche des Blechbandes werden dabei eben belassen und nach der Formung der Wellen beispielsweise durch Punktschweissen mindestens stellenweise mit zur Bildung der Distanzelemente 215 dienenden Stahl-Streifen verbunden. Danach wird Aluminiumoxid und katalytisch aktives Material auf die beiden Oberflächen des gewellten Bereiches des Blechbandes aufgebracht. Die nachher die Halteabschnitte 213e, 213f bildenden Randbereiche des Blechbandes und mindestens die nachher verschweissten Flächen der Stahl-Streifen bleiben dagegen blank, d.h. unbeschichtet. Das beschichtete Blechband kann nun in erste Blechelemente zerschnitten werden, wobei die Schnittlinien mit den Längsrändern des Blechbandes den Winkel alpha bilden. Ferner kann man mindestens einen zur Bildung von zweiten Blechelementen dienenden, ebenen, bandförmigen Blechteil herstellen, Danach kann man die beiden Oberflächen des zur Bildung des Hauptabschnittes 214a von zweiten Blechelementen 214 dienenden, mittleren Bereichs dieses bandförmigen Blechteils oder Blechbandes mit Aluminiumoxid sowie katalytisch aktiven Material beschichten und das Blechband durch schräge Schnitte in zweite Blechelemente 214 zerschneiden. Schliesslich können die bereits mit Distanzelementen 215 verbundenen ersten Blechelemente 213 und die zweiten Blechelemente 214 zu Katalysator-Körpern 211 zusammengesetzt und durch Schweissverbindungen starr miteinander verbunden werden.

Beim Betrieb des Katalysators 201 strömt das Abgas durch den Einlass 207 in den inneren Hohlraum 221. Danach strömt das Abgas bei den als Abgas-Eintrittsflächen dienenden Seitenflächen 211d der Katalysator-Körper in die Durchgänge 217 und durch diese hindurch. Das bei den als Abgas-Austrittsflächen dienenden Seitenflächen 211c wieder aus den Katalysator-Körpern austretende Abgas strömt dann durch den äusseren Hohlraum 222 zum Auslass.

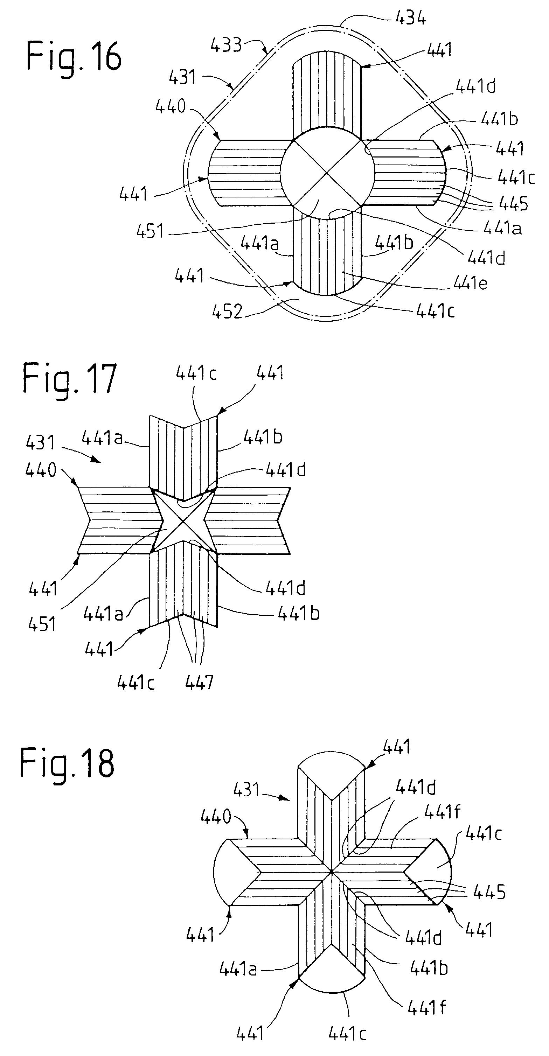

Der schematisch in der Fig. 14 dargestellte Katalysator 431 definiert eine Achse 432 und besitzt ein Gehäuse 433 mit einer metallischen Wandung. Diese weist einen zur Achse 432 parallelen Mantel 434 und an dessen beiden Enden angeordnete, fest und dicht durch Bördel mit diesem verbundene Endwände 435, 436 auf. Der Mantel ist auch in der Fig. 16 angedeutet und hat gemäss dieser im Querschnitt zum Beispiel ungefähr die Form eines Quadrats, dessen Ecken durch abgerundete Übergänge ersetzt sind. Die beiden Endwände 435, 436 sind im wesentlichen eben sowie rechtwinklig zur Achse 432 und besitzen im Zentrum ein Loch. Der Einlass 437 und der Auslass 438 des Katalysators 431 besitzen je einen Stutzen, der aus einem zylindrischen Rohrstück besteht, das Loch der ersten Endwand 435 bzw. der zweiten Endwand 436 durchdringt, in den von der Wandung des Gehäuses umschlossenen Innenraum hineinragt und starr sowie dicht mit der betreffenden Endwand verbunden, nämlich verschweisst ist. Der sich im genannten Innenraum befindende Abschnitt des zum Auslass 438 gehörenden Stutzen bzw. Rohrstücks ist mit über seinen Mantel verteilten Löchern 438a versehen.

Der Katalysator 431 weist im Gehäuse angeordnete auch in den Figuren 15 bis 18 ersichtliche Katalysatormittel 440 mit vier um die Achse 432 herum verteilten, zusammen ein Kreuz bildenden Katalysator-Körpern 441 auf. Jeder von diesen besitzt zwei ebene, zueinander und zur Achse 432 parallele Seitenflächen 441a bzw. 441b, eine Aussenfläche 441c, eine Innenfläche 441d mit zwei Endflächen 441e bzw. 441f. Die vier Innenflächen 441d bilden zusammen eine die Achse vollständig umschliessende Fläche. Dagegen stehen die Aussenflächen 441c der vier Katalysator-Körper 441 in Abstand voneinander. Die an die Endflächen 441e anstossenden, in den Fig. 14 und 16 ersichtlichen Ränder der Innenflächen 441d bilden zusammen eine in sich geschlossene Linie, nämlich im wesentlichen einen Kreis. Die Aussenflächen 441c und Innenflächen 441d bestehen aus Regelflächen und sind bei jedem Katalysator-Körper 441 in allen zu dessen Seitenflächen 441a, 441b parallelen Schnitten gerade und parallel zueinander. Die Längsränder der vier Aussenflächen 441c und der vier Innenflächen 441d sind zudem parallel zur Achse 432 und liegen paarweise aneinander an. Die restlichen, mittleren Querschnittsbereiche der Aussen- und Innenflächen sind von den Endflächen 441e weg zur Achse hin geneigt, so dass die Innenflächen 441d jedes Katalysator-Körpers 441 bei dessen Endfläche 441f einen V-förmigen Rand haben, der bei jedem V-Schenkel am Rand einer benachbarten Innenfläche 441d anliegt. Die vier Innenflächen 441d laufen dementsprechend bei ihren an die Endflächen 441f anstossenden Rändern zu zwei einander kreuzenden, geraden Linien zusammen.

Jeder Katalysator-Körper 441 weist ein Paket von abwechselnd aufeinander folgenden, ersten und zweiten Blechelementen auf. Die ersten Blechelemente 443 besitzen zum Teil in den Figuren 14 und 15 angedeutete Wellen. Jedes erste Blechelement 443 definiert zwei sich an seine Wellenscheitel anschmiegende, ebene Schmiegeflächen. Die zweiten Blechelemente sind wiederum im wesentlichen eben. Die Blechelemente sind in einer zu den ebenen Schmiegeflächen der ersten Blechelemente 443 und zu den Oberflächen sowie Schmiegeflächen der zweiten Blechelemente rechtwinkligen Projektion rechteckförmig, so dass also insbesondere die beiden längeren Ränder jedes Blechelementes gerade und parallel zueinander sind. Die Wellen jedes ersten Blechelementes 443 sind gerade, parallel zueinander und rechtwinklig zu den Längsrändern des betreffenden Blechelementes. Die zum gleichen Katalysator-Körper 441 gehörenden Blechelemente sind durch Haltemittel derart starr miteinander verbunden, dass die zweiten, ebenen Blechelemente an den Wellen scheiteln der ersten Blechelemente 443 anliegen. Die Haltemittel können zum Beispiel streifen- oder leistenförmige Distanzelemente 445 aufweisen, die ähnlich wie die Distanzelemente 215 des in der Fig. 13 ersichtlichen Katalysator-Körpers bei den kürzeren Rändern der Blechelemente angeordnet sind und mindestens annähernd parallel zu Wellen des an ihnen anliegenden, ersten Blechelementes 443 verlaufen. Die zum gleichen Katalysator-Körper gehörenden Blechelemente sind jedoch derart gegeneinander verdreht, dass ihre Längsränder zusammen die Aussenfläche 441c und Innenfläche 441d bilden, welche je aus einer gekrümmten Regelfläche bestehen. Die zu ein und demselben Katalysator-Körper 441 gehörenden Blechelemente sind bei ihren kürzeren Rändern miteinander und mit den Distanzelementen 445 verschweisst. Die Endflächen 441e, 441f können aus gekrümmten, sich beim Verdrehen der rechteckförmigen Blechelemente ergebenden Regelflächen bestehen. Die Endflächen 441e sind jedoch in der Fig. 15 zur Vereinfachung als Ebenen dargestellt. Man könnte jedoch die Endflächen 441e und/oder 441f durch eine Nachbearbeitung eben und rechtwinklig zur Achse 432 ausbilden. Die vier Katalysator-Körper 441 sind bei den Längsrändern ihrer Innenflächen 441d und bei den in den Endflächen 441f liegenden Rändern der Innenflächen 441d starr und dicht miteinander verbunden, nämlich verschweisst. Nötigenfalls können noch einige nicht gezeichnete Streben oder dergleichen vorhanden sein, welche die verschiedenen Katalysator-Körper zusätzlich miteinander verbinden. Jeder Katalysator-Körper 441 besitzt eine Gruppe von geraden Durchgängen 447, die von der Innenfläche 441c zur Aussenfläche 441d verlaufen. Alle zum gleichen Katalysator-Körper 441 gehörenden Durchgänge 447 sind parallel zu ein und derselben durch die Achse 432 sowie durch die Mitte des Katalysator-Körpers hindurch verlaufenden Ebene und zu den Seitenflächen 441a, 441b. Die Durchgänge 447 sind ferner rechtwinklig zu den Längsrändern der sie begrenzenden, ersten Blechelemente. Die zum gleichen Katalysator-Körper 441 gehörenden Durchgänge 447 haben also verschiedene Richtungen, die vom Abstand von der durch die Achse 432 und durch die Mitte des Katalysator-Körpers 441 hindurch verlaufenden Ebene abhängig sind sind. Es sei noch angemerkt, dass jeder Katalysator-Körper 441 im Vergleich zu seinen Aussenabmessungen in Wirklichkeit viel mehr Blechelemente besitzt als in den Figuren 14 bis 18 gezeichnet sind.

Die Katalysatormittel 440 sind bei den Endflächen 441e, 441f starr mit den sich im Innenraum des Gehäuses 433 befindenden Enden der Stutzen verbunden, welche den Einlass 437 bzw. den Auslass 438 bilden. Die Katalysatormittel 440 stehen allseitig in Abstand von der Wandung des Gehäuses 433. Der den Einlass 437 bildende Stutzen mündet an seinem dicht mit den vier Katalysator-Körpern 441 verbundenen Ende in den von den Innenflächen 441d umschlossenen, inneren Hohlraum 451. Die zu den vier Katalyxsator-Körpern 441 gehörenden Durchgänge 447 verlaufen entsprechend der Anordnung der Katalysator-Körper auf vier verschiedene, gleichmässig um die Achse 432 herum verteilte Seiten des inneren Hohlraums 451 von diesem weg. Der Innendurchmesser des Einlasses 437 und insbesondere von dessen mit den Katalysatormitteln 440 verbundenen Ende ist und ungefähr und vorzugsweise genau gleich dem Durchmesser des Kreises, der von den in den Endflächen 441e liegenden Rändern der Innenflächen 441d gebildet ist, so dass sich der innere Hohlraum 451 stufenlos an den Innenraum des Einlasses anschliesst. Der innere Hohlraum 451 ist vollständig frei, enthält also kein den Begrenzungselementen 250, 380, 420 entsprechendes Begrenzungselement und hat eine entlang der Achse 432 vom Einlass weg linear abnehmende Querschnittsfläche. Zwischen dem Mantel 434 und den Flächen 441a, 441b, 441c der Katalysator-Körper 441 ist ein äusserer Hohlraum 452 vorhanden, der durch die Löcher 438a des Stutzens des Auslasses 438 mit dessen Innenraum verbunden ist.

Der Katalysator 431 kann in eine Auspuff-Einrichtung eines Verbrennungsmotors eingebaut werden. Bei dessen Betrieb strömt dann in der Fig. 14 durch Pfeile veranschaulichtes Abgas durch den Einlass 437 in den inneren Hohlraum 451. Das Abgas wird in diesem umgelenkt sowie auf die Durchgänge 447 verteilt und strömt dann durch die Durchgänge 447, wobei es katalytisch behandelt wird. Das Abgas gelangt dann in den äusseren Hohlraum 452 und strömt in diesem zum Auslass 438, wobei auch ein Teil des Abgases zwischen den Seitenflächen 441a, 441b von einander benachbarten Katalysator-Körpern 441 hindurch strömen kann. Das Abgas strömt danach durch die Löcher 438a in den Innenraum des Auslasses 438 und verlässt durch diesen den Innenraum des Gehäuses 433.

Wie schon nach der Figurenlegende erwähnt, sind verschiedene Figuren nicht-massstäblich gezeichnet. Hierzu ist insbesondere noch anzumerken, dass die Distanzelemente 5, 15, 65, 135, 145, 155, 215, 445 in Wirklichkeit im Querschnitt vorzugsweise ein schmales Rechteck bilden, dessen längere Rechteckseiten parallel zu den Flächenabschnitten der Blechelemente sind, an denen die Distanzelemente anliegen. Bei den Katalysator-Körpern, deren erste Blechelemente Wellen mit konstanter oder entlang den Wellen variierender Höhe aufweisen, ist die rechtwinklig zu den an Blechelementen anliegenden Flächen der Distanzelemente gemessene Querschnittsabmessung, d.h. Dicke der Distanzelemente gleich wie die Wellenhöhe zum Beispiel ungefähr 0,3 mm bis 1 mm. Die parallel zu den Flächenabschnitten der Blechelement-Halteabschnitte gemessene Querschnittsabmessung, d. h. Breite der Distanzelemente ist dann vorzugsweise mindestens 5-mal und zum Beispiel ungefähr 10-mal grösser als die Dicke der Distanzelemente.

Die Katalysator-Körper und Katalysatoren können noch in anderer Weise geändert werden.

Zunächst können Merkmale von verschiedenen, bereits beschriebenen Ausführungsformen miteinander kombiniert werden. Beispielsweise könnte man die Blechelemente und Haltemittel bei den Katalysator-Körpern 61, 131, 151 analog ändern, wie es für den Katalysator-Körper 1 anhand der Fig. 4 beschieben wurde.

Bei dem in den Figuren 10 bis 13 ersichtlichen Katalysator-Körpern 211 könnte man die obere und/oder die untere Begrenzung der beiden Katalysator-Körper 111d bzw. Blechelement-Pakete durch Wellen aufweisende, erste Blechelemente statt durch zweite, ebene Blechelemente bilden.

Die Grundflächen und Deckflächen der in den Figuren 10 bis 13 ersichtlichen Katalysator-Körper 211 könnten eventuell statt aus schiefwinkligen Parallelogrammen aus Parallelogrammen mit zueinander rechtwinkligen Seiten - d.h. Rechtecken oder Quadraten - oder aus Vierecken mit nur zwei oder gar keinen zueinander parallelen Seiten bzw. Rändern bestehen. Wenn die Katalysator-Körper 211 und ihre Blechelemente rechteck- oder quadratförmig gemacht werden, können die Blechelemente zudem analog wie in den Figur 4 aus Abschnitten von zusammenhängenden Bändern bestehen. Die Anordnung der Katalysator-Körper im Gehäuse und das Herstellungsverfahren wäre dann entsprechend anzupassen.

Bei den anhand der Figuren 9 bis 13 beschriebenen Katalysatormitteln sind die durch die Blechelemente definierten, sich an deren Flächen anschmiegenden Schmiegeebenen und auch die ebenen Blechelemente selbst parallel zur Achse der Katalysatoren und Katalysatormittel. Man kann jedoch die BLechelemente 153, 154 der in der Fig. 9 ersichtlichen Katalysator-Körper 151 durch Blechelemente ersetzen, deren Schmiegeebenen rechtwinklig zur Achse der Katalysatormittel sind und die in einer zu den Schmiegeebenen rechtwinkligen Projektion - d. h. in einer axialen Ansicht - ein rechtwinkliges Parallelogramm bilden. Die Katalysator-Körper haben dann ebene Aussen- und Innenflächen anstelle der in der Fig. 9 ersichtlichen, gebogenen Aussenflächen 151a bzw. gebogenen Innenflächen 151b. Die ebenen, zusammen einen inneren Hohlraumm umschliessenden Innenflächen bilden dann zusammen im Querschnitt ein Polygon. Die Wellen und Durchgänge verlaufen dann wie in der Fig. 9 vom inneren Hohlraum weg nach aussen. Bei den gemäss den Figuren 10 bis 12 V-förmig angeordneten Katalysator-Körpern können die Blechelemente derart angeordnet werden, dass die durch die Blechelemente definierten Schmiegeebenen rechtwinklig zu den Wänden 204b des Gehäuses sowie entweder rechtwinklig zur Achse 202 oder rechtwinklig zu den Innenflächen 211d sowie Aussenflächen 211c sind und also in beiden Fällen einen ziemlich grossen Winkel mit der Achse 202 bilden. Die Wellen können dann wie bei den gezeichneten Katalysator-Körpern parallel zu den Wänden 204b vom inneren Hohlraum 221 zum äusseren Hohlraum 222 verlaufen.

Die in den Figuren 14 bis 18 ersichtlichen Katalysatormittel 440 könnten statt vier Katalysator-Körpern 441 nur zwei oder drei oder mehr als vier Katalysator-Körper mit je einem Paket von Blechelementen aufweisen.

## Patentansprüche

1. Katalysatormittel für die katalytische Behandlung von Abgas, dadurch gekennzeichnet, dass sie mindestens ein Paket von zusammen Durchgänge (7, 17, 67, 87, 157, 217, 447) für das Abgas begrenzender, abwechselnd aufeinander folgenden, ersten, gewellten und zweiten, wellenlosen Blechelementen (3, 4, 13, 14, 63, 64, 133, 134, 143, 153, 154, 213, 214, 443) aufweisen, von denen jedes zwei sich auf einander abgewandten Seiten der Durchgänge (7, 17, 67, 87, 157, 217, 447) befindende Ränder und entlang von diesen verlaufende Halteabschnitte (3e, 3f, 4e, 4f, 13e, 13f, 14e, 14f, 63e, 63f, 64e, 64f, 213e, 213f, 214f) besitzt, dass jeder Halteabschnitt (3e, 3f, 4e, 4f, 13e, 13f, 14e, 14f, 63e, 63f, 64e, o4f, 213e, 211f, 214f) jedes Sich zwischen zwei Blechelementen (3, 4, 13, 14, 63, 64, 133, 134, 143, 153, 154, 213, 214, 443) befindenden Blechelenents (3, 4, 13, 14, 63, 64, 133, 134, 143, 153, 154, 213, 214, 443) mit einem Flächenabschnitt an einem Distanzelement (5, 15, 65, 135, 145, 215, 445) und mit einem diesem abgewandten Flächenabschnitt an einem gegenüberstehenden Halteabschnitt (3e, 3f, 4e, 4f, 13e, 13f, 14e, 14f, 63e, 63f, 64e, 64f, 213e, 213f, 214f) anliegt und dass die aneinander anliegenden Halteabschnitte (3e, 3f, 4e, 4f, 13e, 13f, 14e, 14f, 63e, 63f, 64e, 64f, 213e, 213f, 214f) und Distanzelemente (5, 15, 65, 135, 145, 215, 445) miteinander verschweisst sind.

2. Katalysatormittel nach Anspruch 1, dadurch gekennzeichnet, dass jedes sich nicht am Ende eines Pakets befindende Blechelement (3, 4, 13, 14, 63, 64, 133, 134, 143, 213, 214, 443) im wesentlichen entlang der ganzen Länge der genannten Ränder mit einem benachbarten Blechelement (3, 4, 13, 14, 63, 64, 133, 134, 143, 213, 214, 443) und mit einem Distanzelement (5, 15, 65, 135, 145, 155, 215, 445) verschweisst ist.

3. Katalysatormittel nach Anspruch 1 oder 2, dadurch gekennzeichnet, dass mehrere aufeinander folgende Blechelemente (13, 14) bei einem der genannten Ränder zusammenhängen und durch Abschnitte eines einstückigen, bandförmigen Teils gebildet sind.

4. Katalysatormittel nach einem der Ansprüche 1 bis 3, dadurch gekennzeichnet, dass jedes Blechelement (3, 4, 13, 14, 63, 64, 133, 134, 143, 213, 214, 443, 473, 474) aus einem separaten Teil besteht.

5. Katalysatormittel nach einem der Ansprüche 1 bis 4, dadurch gekennzeichnet, dass die Blechelemente (3, 4, 13, 14, 63, 64, 133, 134, 143, 153, 154, 213, 214, 443) zusätzlich zu den genannten, ersten Rändern noch zwei andere einander abgewandte, zweite Ränder besitzen und dass jede Welle (3b, 13b, 63b, 213b) von einem zweiten Rand bis zu dem diesem abgewandten zweiten Rand eines ersten Blechelements (3, 13, 63, 133, 143, 153, 213, 443) verläuft und in einer Draufsicht auf dieses entlang ihrer ganzen Länge gerade ist.

6. Katalysatormittel nach Anspruch 5, dadurch gekennzeichnet, dass die Wellen (3b, 13b, 63b, 213b) jedes ersten Blechelements (3, 13, 63, 133, 143, 153, 213, 443) in einer Draufsicht auf dieses parallel zu dessen ersten Rändern sind.

7. Katalysator mittel nach einem der Ansprüche 1 bis 6, dadurch gekennzeichnet, dass an die Durchgänge (7, 17, 67, 87, 157, 217, 447, 477) angrenzende Hauptabschnitte (3a, 4a, 13a, 14a, 213a, 214a) der Blechelemente (3, 4, 13, 14, 63, 64, 133, 134, 143, 213, 214, 443) mit einem Überzug versehen sind, der katalytisch aktives Material aufweist.

8. Katalysatormittel nach einem der Ansprüche 1 bis 7, dadurch gekennzeichnet, dass die Halteabschnitte (3e, 3f, 4e, 4f, 13e, 13f, 14e, 14f, 63e, 63f, 64e, 64f, 213e, 213f, 214f) der Blechelemente (3, 4, 13, 14, 63, 64, 133, 134, 143, 153, 154, 213, 214, 443) durch blankes metallisches Material gebildet und überzugsfrei sind.

9. Katalysatormittel nach einem der Ansprüche 1 bis 8, dadurch gekennzeichnet, dass die Blechelemente (3, 4, 13, 14, 63, 64, 133, 134, 143, 153, 154, 213, 214, 443) einen Kern aus Stahl aufweisen, dass die Distanzelemente (5, 15, 65, 135, 145, 215, 445) aus Stahl bestehen und dass die genannten Flächenabschnitte der Halteabschnitte (3e, 3f, 4e, 4f, 13e, 13f, 14e, 14f, 63e, 63f, 64e, 64f, 213e, 213f, 214f) durch blanken Stahl gebildet sind und unmittelbar an dem aus blankem Stahl gebildeten Flächenabschnitt eines gegenüberstehenden Halteabschnitts (3e, 3f, 4e, 4f, 13e, 13f, 14e, 14f, 63e, 63f, 64e, 64f, 213e, 213f, 214f) bzw. an einer aus blankem Stahl gebildeten Fläche eines Distanzelements (5, 15, 65, 135, 145, 215, 445) anliegen.

10. Katalysatormittel nach einem der Ansprüche 1 bis 9, dadurch gekennzeichnet, dass die Halteabschnitte (3e, 3f, 13e, 13f, 63e, 63f, 213e, 213f) jedes ersten Blechelements (3, 13, 63, 133, 143, 153, 213, 443) in einem diese kreuzenden Schnitt gerade sind.

11. Katalysatormittel nach einem der Ansprüche 1 bis 10, dadurch gekennzeichnet, dass jedes zweite Blechelement (4, 14, 134, 154, 214) und jeder Halteabschnitt (3e, 3f, 13e, 13f, 213e, 213f) jedes ersten Blechelements (3, 13, 133, 143, 213, 443) im wesentlichen eben ist.

12. Katalysatormittel nach einem der Ansprüche 1 bis 11, dadurch gekennzeichnet, dass jedes Blechelement (3, 4, 13, 14, 63, 64, 133, 134, 143, 213, 214, 443) in einer Draufsicht parallelogrammförmig ist.

13. Katalysatormittel nach einem der Ansprüche 1 bis 12, dadurch gekennzeichnet, dass jedes Blechelement (213, 214) und das bzw. jedes Paket in einer Draufsicht die Form eines schiefwinkligen Parallelogramms hat.

14. Katalysatormittel nach einem der Ansprüche 1 bis 13, dadurch gekennzeichnet, dass die Blechelemente (3, 4, 13, 14, 63, 64, 133, 134, 143, 153, 154, 443) um einen Hohlraum (89, 451) herum verteilt sind und diesen im Querschnitt im wesentlichen vollständig umschliessen und dass die Wellen (3b, 13b, 63b) vom Hohlraum (89) weg nach aussen verlaufen.

15. Katalysatormittel nach Anspruch 14, dadurch gekennzeichnet, dass die um den Hohlraum (89) herum verteilten Blechelemente (3, 4, 13, 14, 63, 64, 133, 134, 143, 153, 154) zu ein und demselben, in sich geschlossenen Paket gehören.

16. Katalysatormittel nach Anspruch 15, dadurch gekennzeichnet, dass der Hohlraum (89) im Querschnitt mindestens zum Teil durch eine von inneren Rändern der Blechelemente (3, 4, 13, 14, 133, 134, 143) gebildete, mindestens zum Teil gebogene, innere Fläche (1b, 61b, 81b, 131b) begrenzt ist und dass die Wellen (3b, 13b) der an einem gebogenen Abschnitt (131f, 131h) der inneren Fläche (1b, 131b) anstossenden, ersten Blechelemente (3, 13, 143) vom Hohlraum (89) weg nach aussen zunehmende Höhen haben.

17. Katalysatormittel nach Anspruch 15, sofern dieser von einem der Ansprüche 1 bis 10, 12, 13 abhängig ist, dadurch gekennzeichnet, dass die Blechelemente (63, 64) in einem durch den Hohlraum verlaufenden Querschnitt mindestens teilweise derart gebogen sind, dass die Höhen der Wellen (63b) bei allen ersten Blechelementen (63) vom Hohlraum weg nach aussen im wesentlichen konstant sind.

18. Katalysatormittel nach einem der Ansprüche 1 bis 13, dadurch gekennzeichnet, dass sie mindestens zwei Pakete von Blechelementen (153, 154, 213, 214,443) aufweisen, dass die zweiten Blechelemente (214) jedes Pakets im wesentlichen eben und zueinander prallel sind, dass ein im Querschnitt mindestens zum Teil von inneren Rändern der Blechelemente (153, 154, 213, 214, 443) begrenzter Hohlraum (221, 451) vorhanden ist und dass die Wellen (213b) von diesem weg nach aussen verlaufen.

19. Katalysatormittel nach Anspruch 18, dadurch gekennzeichnet, dass die inneren Ränder der Blechelemente (443) in Draufsichten auf die letzteren gerade sind und dass die zum gleichen Paket gehörenden Blechelemente (443) derart gegeneinander verdreht sind, dass die Querschnittsfläche des Hohlraums (451) in einer von einem Ende von diesem weg verlaufenden Richtung abnimmt.

20. Katalysatormittel nach einem der Ansprüche 1 bis 19, dadurch gekennzeichnet, dass die einander benachbarten Blechelemente (3, 4, 13, 14, 63, 64, 133, 134, 143, 153, 154, 213, 214, 443) bei den Wellenscheiteln im wesentlichen entlang den ganzen Längen von diesen aneinander anliegen, so dass zwischen jedem Paar von einander benachbarten Blechelementen (3, 4, 13, 14, 63, 64, 133, 134, 143, 153, 154, 213, 214, 443) mehrere im wesentlichen vollständig voneinander getrennte Durchgänge (7, 17, 67, 87, 157, 217, 447) vorhanden sind.

21. Verfahren zur Herstellung von Katalysatormitteln nach einem der Ansprüche 1 bis 20, dadurch gekennzeichnet, dass erste Blechelemente (3, 13, 63, 133, 143, 153, 213, 443) mit einem nachher zum Angrenzen an die Durchgänge (7, 17, 67, 87, 157, 217, 447) bestimmten, Wellen (3b, 13b, 63b, 213b) aufweisenden Hauptabschnitt (3a, 13a, 213a) und zwei aufeinander abgewandten Seiten von diesem angeordneten Halteabschnitten (3e, 3f, 13e, 13f, 63e, 63f, 213e, 213f) gebildet werden, dass zweite Blechelemente (4, 14, 64, 134, 154, 214) mit einem nachher zum Angrenzen an die Durchgänge (7, 17, 67, 87, 157, 217, 447) bestimmten Hauptabschnitt (4a, 14a, 214a) und zwei aufeinander abgewandten Seiten von diesem angeordneten Halteabschnitten (4e, 4f, 14e, 14f, 64e, 64f, 214e, 214f) gebildet werden, dass die Hauptabschnitte (4a, 14a, 214a) der Blechelemente (3, 4, 13, 14, 63, 64, 133, 134, 143, 153, 154, 213, 214, 443) mit katalytisch aktives Material aufweisenden Überzügen versehen werden, dass die Halteabschnitte (3e, 3f, 4e, 4f, 13e, 13f, 14e, 14f, 63e, 63f, 64e, 64f, 213e, 213f, 214f) überzugsfrei gehalten werden, dass nach dem Aufbringen der Überzüge mindestens ein Paket von abwechselnd aufeinanderfolgenden, ersten und zweiten Blechelementen (3, 4, 13, 14, 63, 64, 133, 134, 143, 153, 154, 213, 214, 443) gebildet wird, dass der Halteabschnitt (3e, 3f, 4e, 4f, 13e, 13f, 14e, 14f, 63e, 63f, 64e, 64f, 213e, 213f, 214f) von jedem nicht ein Ende des bzw. eines Pakets bildenden Blechelement (3, 4, 13, 14, 63, 64, 133, 134, 143, 213, 214, 443) mit einem Flächenabschnitt zum Anliegen an einem Distanzelement (5, 15, 65, 135, 145, 155, 215, 305) und mit einem diesem abgewandten Flächenabschnitt zum direkten Anliegen an einem benachbarten Blechelement(3, 4, 13, 14, 63, 64, 133, 134, 143, 213, 214, 443) gebracht wird und dass die aneinander anliegenden Halteabschnitte (3e, 3f, 4e, 4f, 13e, 13f, 14e, 14f, 63e, 63f, 64e, 64f, 213e, 213f, 214f) und Distanzelemente (5, 15, 65, 135, 145, 215, 445) miteinander verschweisst werden.

22. Verfahren nach Anspruch 21, dadurch gekennzeichnet, dass ein zur Bildung mehrerer Blechelemente (3, 63, 133, 143, 213, 443) dienendes Blechband hergestellt wird, dass Distanzelemente (5, 65, 135, 145, 215, 445) am Blechband fixiert werden, dass dieses zusammen mit den Distanzelementen (5, 65, 135, 145, 215, 445) in Stücke zerschnitten wird, die Blechelemente (3, 63, 133, 143, 213, 443) und an diesen fixierte Distanzelemente (5, 65, 135, 145, 215, 445) bilden, und dass solche Blechelemente (3, 63, 133, 143, 213, 443) zusammen mit andern Blechelementen (4, 64, 134, 154, 214) zur Bildung des bzw. eines Pakets aufeinander gestapelt werden.

23. Verfahren nach Anspruch 22, dadurch gekennzeichnet, dass das Fixieren der Distanzelemente (5, 65, 135, 145, 215, 445)am Blechband durch Punktschweissen erfolgt und dass die aneinander anliegenden Halteabschnitte (3e, 3f, 4e, 4f, 63e, 63f, 64e, 64f, 213e, 213f, 214f) und Distanzelemente (5, 65, 135, 145, 215, 445) nach der Bildung eines Pakets im wesentlichen entlang den ganzen Längen der bei den Halteabschnitten (3e, 3f, 4e, 4f, 63e, 63f, 64e, 64f, 213e, 213f, 214f) vorhandenen Blechelement-Ränder miteinander verschweisst werden.

## Claims

1. Catalyst means for the catalytic treatment of exhaust gas, characterized in that they have at least one packet of alternating first, wavy and second, waveless sheet metal members (3, 4, 13, 14, 63, 64, 133, 134, 143, 153, 154, 213, 214, 443) which together bound passages (7, 17, 67, 87, 157, 217, 447) for the exhaust gas and each of which has two edges located on opposite sides of the passages (7, 17, 67, 87, 157, 217, 447) and retaining sections (3e, 3f, 4e, 4f, 13e, 13f, 14e, 14f, 63e, 63f, 64e, 64f, 213e, 213f, 214f) running along said edges, that each retaining section (3e, 3f, 4e, 4f, 13e, 13f, 14e, 14f, 63e, 63f, 64e, 64f, 213e, 213f, 214f) of each sheet metal member (3, 4, 13, 14, 63, 64, 133, 134, 143, 153, 154, 213, 214, 443) located between two sheet metal members (3, 4, 13, 14, 63, 64, 133, 134, 143, 153, 154, 213, 214, 443) rests with a surface section against a spacer member (5, 15, 65, 135, 145, 215, 445) and, with a surface section facing away from said spacer member, against an opposite retaining section (3e, 3f, 4e, 4f, 13e, 13f, 14e, 14f, 63e, 63f, 64e, 64f, 213e, 213f, 214f) and that the adjacent retaining sections (3e, 3f, 4e, 4f, 13e, 13f, 14e, 14f, 63e, 63f, 64e, 64f, 213e, 213f, 214f) and spacer members (5, 15, 65, 135, 145, 215, 445) are welded to one another.

2. Catalyst means according to Claim 1,
characterized in that each sheet metal member (3, 4, 13, 14, 63, 64, 133, 134, 143, 213, 214, 443) not located at the end of a packet is welded essentially along the entire length of the stated edges with an adjacent sheet metal member (3, 4, 13, 14, 63, 64, 133, 134, 143, 213, 214, 443) and with a spacer member (5, 15, 65, 135, 145, 155, 215, 445).

3. Catalyst means according to Claim 1 or 2,
characterized in that a plurality of successive sheet metal members (13, 14) are continuous at one of the stated edges and are formed by sections of a one-piece, strip-like part.

4. Catalyst means according to any of Claims 1 to 3, characterized in that each sheet metal member (3, 4, 13, 14, 63, 64, 133, 134, 143, 213, 214, 443, 473, 474) consists of a separate part.

5. Catalyst means according to any of Claims 1 to 4, characterized in that the sheet metal members (3, 4, 13, 14, 63, 64, 133, 134, 143, 153, 154, 213, 214, 443) have two other second edges facing away from one another in addition to the stated, first edges and that each wave (3b, 13b, 63b, 213b) runs from a second edge to that second edge of a first sheet metal member (3, 13, 63, 133, 143, 153, 213, 243) which faces away from said second edge and is straight along its entire length in a plan view thereof.

6. Catalyst means according to Claim 5,
characterized in that the waves (3b, 13b, 63b, 213b) of each first sheet metal member (3, 13, 63, 133, 143, 153, 213, 443) are parallel to its first edges in a plan view thereof.

7. Catalyst means according to any of Claims 1 to 6, characterized in that those main sections (3a, 4a, 13a, 14a, 213a, 214a) of the sheet metal members (3, 4, 13, 14, 63, 64, 133, 134, 143, 213, 214, 443) which bound passages (7, 17, 67, 87, 157, 217, 447, 477) are provided with a coating which contains catalytically active material.

8. Catalyst means according to any of Claims 1 to 7, characterized in that the retaining sections (3e, 3f, 4e, 4f, 13e, 13f, 14e, 14f, 63e, 63f, 64e, 64f, 213e, 213f, 214f) of the sheet metal members (3, 4, 13, 14, 63, 64, 133, 134, 143, 153, 154, 213, 214, 443) are formed by untreated metallic material and are free of coatings.

9. Catalyst means according to any of Claims 1 to 8, characterized in that the sheet metal members (3, 4, 13, 14, 63, 64, 133, 134, 143, 153, 154, 213, 214, 443) have a core of steel, that the spacer members (5, 15, 65, 135, 145, 215, 445) consist of steel and that the stated surface sections of the retaining sections (3e, 3f, 4e, 4f, 13e, 13f, 14e, 14f, 63e, 63f, 64e, 64f, 213e, 213f, 214f) are formed by untreated steel and rest directly against that surface section of an opposite retaining section (3e, 3f, 4e, 4f, 13e, 13f, 14e, 14f, 63e, 63f, 64e, 64f, 213e, 213f, 214f) which is formed from untreated steel or against a surface of a spacer member (5, 15, 65, 135, 145, 215, 445), which surface is formed from untreated steel.

10. Catalyst means according to any of Claims 1 to 9, characterized in that the retaining sections (3e, 3f, 13e, 13f, 63e, 63f, 213e, 213f) of each first sheet metal member (3, 13, 63, 133, 143, 153, 213, 443) are straight in a section intersecting said retaining sections.

11. Catalyst means according to any of Claims 1 to 10, characterized in that each second sheet metal member (4, 14, 134, 154, 214) and each retaining section (3e, 3f, 13e, 13f, 213e, 213f) of each first sheet metal member (3, 13, 133, 143, 213, 443) are essentially flat.

12. Catalyst means according to any of Claims 1 to 11, characterized in that each sheet metal member (3, 4, 13, 14, 63, 64, 133, 134, 143, 213, 214, 443) is in the form of a parallelogram in plan view.

13. Catalyst means according to any of Claims 1 to 12, characterized in that each sheet metal member (213, 214) and the or each packet has the shape of an oblique-angled parallelogram in plan view.

14. Catalyst means according to any of Claims 1 to 13, characterized in that the sheet metal members (3, 4, 13, 14, 63, 64, 133, 134, 143, 153, 154, 443) are distributed around a cavity (89, 451) and essentially completely enclose said cavity in cross-section and that the waves (3b, 13b, 63b) run outwards away from the cavity (89).

15. Catalyst means according to Claim 14,
characterized in that the sheet metal members (3, 4, 13, 14, 63, 64, 133, 134, 143, 153, 154) distributed around the cavity (89) belong to one and the same closed packet.

16. Catalyst means according to Claim 15,
characterized in that the cavity (89) is bounded in cross-section at least partly by an inner surface (1b, 61b, 81b, 131b) formed by inner edges of the sheet metal members (3, 4, 13, 14, 133, 134, 143) and at least partly curved, and that the waves (3b, 13b) of the first sheet metal members (3, 13, 143) abutting a curved section (131f, 131h) of the inner surface (1b, 131b) have heights increasing outwards away from the cavity (89).

17. Catalyst means according to Claim 15, where this is dependent on any of Claims 1 to 10, 12 and 13, characterized in that the sheet metal members (63, 64) are at least partly curved, in a cross-section through the cavity, in such a way that the heights of the waves (63b) are essentially constant in an outward direction away from the cavity in the case of all first sheet metal members (63).

18. Catalyst means according to any of Claims 1 to 13, characterized in that they have at least two packets of sheet metal members (153, 154, 213, 214, 443), that the second sheet metal members (214) of each packet are essentially flat and parallel to one another, that a cavity (221, 451) bounded in cross-section at least partly by inner edges of the sheet metal members (153, 154, 213, 214, 443) is present and that the waves (213b) run outwards away from said cavity.

19. Catalyst means according to Claim 18,
characterized in that the inner edges of the sheet metal members (443) are straight in plan views of said sheet metal members and that the sheet metal members (443) belonging to the same packet are rotated relative to one another in such a way that the cross-sectional area of the cavity (451) decreases in a direction away from one end of said cavity.

20. Catalyst means according to any of Claims 1 to 19, characterized in that the sheet metal members (3, 4, 13, 14, 63, 64, 133, 134, 143, 153, 154, 213, 214, 443) adjacent to one another rest against one another at the wave summits essentially along the entire length thereof so that a plurality of passages (7, 17, 67, 87, 157, 217, 447) essentially completely separated from one another are present between each pair of adjacent sheet metal members (3, 4, 13, 14, 63, 64, 133, 134, 143, 153, 154, 213, 214, 443).

21. Process for the production of catalyst means according to any of Claims 1 to 20, characterized in that first sheet metal members, (3, 13, 63, 133, 143, 153, 213, 443) are formed, having a main section (3a, 13a, 213a) intended subsequently for bounding the passages (7, 17, 67, 87, 157, 217, 447) and possessing waves (3b, 13b, 63b, 213b) and two retaining sections (3e, 3f, 13e, 13f, 63e, 63f, 213e, 213f) arranged on opposite sides of said main section, that second sheet metal members (4, 14, 64, 134, 154, 214) are formed, having a main section (4a, 14a, 214a) intended subsequently for bounding the passages (7, 17, 67, 87, 157, 217, 447) and two retaining sections (4e, 4f, 14e, 14f, 64e, 64f, 214e, 214f) arranged on opposite sides of said main section, that the main sections (4a, 14a, 214a) of the sheet metal members (3, 4, 13, 14, 63, 64, 133, 134, 143, 153, 154, 213, 214, 443) are provided with coatings containing catalytically active material, that the retaining sections (3e, 3f, 4e, 4f, 13e, 13f, 14e, 14f, 63e, 63f, 64e, 64f, 213e, 213f, 214f) are kept free of coatings, that, after application of the coatings, at least one packet of alternating first and second sheet metal members (3, 4, 13, 14, 63, 64, 133, 134, 143, 153, 154, 213, 214, 443) is formed, that the retaining section (3e, 3f, 4e, 4f, 13e, 13f, 14e, 14f, 63e, 63f, 64e, 64f, 213e, 213f, 214f) of each sheet metal member (3, 4, 13, 14, 63, 64, 133, 134, 143, 213, 214, 443) not forming an end of the or of a packet is caused to rest, with a surface section, against a spacer member (5, 15, 65, 135, 145, 155, 215, 305) and, with a surface section facing away from said spacer member, directly against an adjacent sheet metal member (3, 4, 13, 14, 63, 64, 133, 134, 143, 213, 214, 443) and that the adjacent retaining sections (3e, 3f, 4e, 4f, 13e, 13f, 14e, 14f, 63e, 63f, 64e, 64f, 213e, 213f, 214f) and spacer members (5, 15, 65, 135, 145, 215, 445) are welded to one another.

22. Process as claimed in Claim 21, characterized in that a metal strip which serves for the formation of a plurality of sheet metal members (3, 63, 133, 143, 213, 443) is produced, that the spacer members (5, 65, 135, 145, 215, 445) are fixed to the metal strip, that this, together with the spacer members (5, 65, 135, 145, 215, 445) is cut into pieces which form sheet metal members (3, 63, 133, 143, 213, 443) and spacer members (5, 65, 135, 145, 215, 445) fixed to said sheet metal members and that such sheet metal members (3, 63, 133, 143, 213, 443) are stacked one on top of the other together with other sheet metal members (4, 64, 134, 154, 214) to form the or a packet.

23. Process according to Claim 22, characterized in that the spacer members (5, 65, 135, 145, 215, 445) are fixed to the metal strip by spot welding and that, after the formation of a packet, the adjacent retaining sections (3e, 3f, 4e, 4f, 63e, 63f, 64e, 64f, 213e, 213f, 214f) and spacer members (5, 65, 135, 145, 215, 445) are welded to one another essentially along the entire lengths of those edges of sheet metal members which are present at the retaining sections (3e, 3f, 4e, 4f, 63e, 63f, 64e, 64f, 213e, 213f, 214f).

## Revendications

1. Moyen de catalyse pour le traitement catalytique d'un gaz d'échappement, caractérisé en ce qu'il comporte au moins une garniture constituée de premiers éléments de tôle ondulés (7, 17, 67, 87, 157, 217, 447) et de deuxièmes éléments de tôle non ondulés (3, 4, 13, 14, 63, 64, 133, 134, 143, 153, 154, 213, 214, 443) délimitant ensemble des passages (7, 17, 67, 87, 157, 217, 447) pour le gaz d'échappement, parmi lesquels éléments de tôle chacun présente deux bordures situées sur des côtés opposés des passages et des tronçons de maintien (3e, 3f, 4e, 4f, 13e, 13f, 14e, 14f, 63e, 63f, 64e, 64f, 213e, 213f, 214f) s'étendant le long de ces bordures, en ce que chaque tronçon de maintien (3e, 3f, 4e, 4f, 13e, 13f, 14e, 14f, 63e, 63f, 64e, 64f, 213e, 213f, 214f) de chaque élément de tôle (3, 4, 13, 14, 63, 64, 133, 134, 143, 153, 154, 213, 214, 443) situé entre deux éléments de tôle (3, 4, 13, 14, 63, 64, 133, 134, 143, 153, 154, 213, 214, 443) repose par un tronçon de surface sur un élément d'écartement (5, 15, 65, 135, 145, 215, 445) et par un tronçon de surface non tourné vers ce dernier, contre un tronçon opposé de maintien (3e, 3f, 4e, 4f, 13e, 13f, 14e, 14f, 63e, 63f, 64e, 64f, 213e, 213f, 214f), et en ce que les tronçons de maintien (3e, 3f, 4e, 4f, 13e, 13f, 14e, 14f, 63e, 63f, 64e, 64f, 213e, 213f, 214f) reposant l'un contre l'autre et les éléments d'écartement (5, 15, 65, 135, 145, 215, 445) sont soudés les uns aux autres.

2. Moyen de catalyse selon la revendication 1, caractérisé en ce que chaque élément de tôle (3, 4, 13, 14, 63, 64, 133, 134, 143, 213, 214, 443) non situé à l'extrémité d'une garniture est soudé essentiellement sur toute la longueur desdites bordures à un élément de tôle (3, 4, 13, 14, 63, 64, 133, 134, 143, 213, 214, 443) et à un élément d'écartement (5, 15, 65, 135, 145, 215, 445).

3. Moyen de catalyse selon les revendications 1 ou 2, caractérisé en ce que plusieurs éléments de tôle successifs (13, 14) sont solidaires l'un de l'autre par l'une desdites bordures et sont formés par des tronçons découpés dans une pièce d'un seul tenant en forme de feuillard.

4. Moyen de catalyse selon l'une des revendications 1 à 3, caractérisé en ce chaque élément de tôle (3, 4, 13, 14, 63, 64, 133, 134, 143, 213, 214, 443, 473, 474) est constitué d'une pièce séparée.

5. Moyen de catalyse selon l'une des revendications 1 à 4, caractérisé en ce que les éléments de tôle (3, 4, 13, 14, 63, 64, 133, 134, 143, 153, 154, 213, 214, 443) possèdent en plus desdites premières bordures encore d'autres deuxièmes bordures non tournées l'une vers l'autre, et en ce que chaque ondulation (3b, 13b, 63b, 213b) s'étend depuis une deuxième bordure jusqu'à la deuxième bordure opposée d'un premier élément de tôle (3, 13, 63, 133, 143, 153, 213, 443), et lorsque ce dernier est vu en plan, elle est rectiligne sur toute sa longueur.

6. Moyen de catalyse selon la revendication 5, caractérisé en ce que les ondulations (3b, 13b, 63b, 213b) de chaque premier élément de tôle (3, 13, 63, 133, 143, 153, 213, 443) sont, lorsque l'élément de tôle est vu en plan, parallèles au premier bord de ce dernier.

7. Moyen de catalyse selon l'une et revendications 1 à 6, caractérisé en ce que des tronçons principaux (3a, 4a, 13a, 14a, 213a, 214a), contigus aux passages (7, 17, 67, 87, 157, 217, 447, 477), des éléments de tôle (3, 4, 13, 14, 63, 64, 133, 134, 143, 213, 214, 443) sont dotés d'un revêtement qui présente un matériau à action catalytique.

8. Moyen de catalyse selon l'une des revendications 1 à 7, caractérisé en ce que les tronçons de maintien (3e, 3f, 4e, 4f, 13e, 13f, 14e, 14f, 63e, 63f, 64e, 64f, 213e, 213f, 214f) des éléments de tôle (3, 4, 13, 14, 63, 64, 133, 134, 143, 153, 154, 213, 214, 443) sont formés par un matériau métallique blanc et ne sont pas dotés d'un revêtement.

9. Moyen de catalyse selon l'une des revendications 1 à 8, caractérisé en ce que les éléments de tôle (3, 4, 13, 14, 63, 64, 133, 134, 143, 153, 154, 213, 214, 443) présente un noyau en acier, en ce que les éléments d'écartement (5, 15, 65, 135, 145, 215, 445) sont réalisés en acier, et en ce que lesdits tronçons de surface des tronçons de maintien (3e, 3f, 4e, 4f, 13e, 13f, 14e, 14f, 63e, 63f, 64e, 64f, 213e, 213f, 214f) sont réalisés en acier blanc et reposent directement sur le tronçon de surface, formé en acier blanc, d'un tronçon de maintien (3e, 3f, 4e, 4f, 13e, 13f, 14e, 14f, 63e, 63f, 64e, 64f, 213e, 213f, 214f) opposé, ou contre une surface, réalisée en acier blanc, d'un élément d'écartement (5, 15, 65, 135, 145, 215, 445)

10. Moyen de catalyse selon l'une des revendications 1 à 9, caractérisé en ce que les tronçons de maintien (3e, 3f, 13e, 13f, 63e, 63f, 213e, 213f) de chaque premier élément de tôle (3, 13, 63, 133, 143, 153, 213, 443) sont rectilignes dans une coupe croisant ces derniers.

11. Moyen de catalyse selon l'une des revendications 1 à 10, caractérisé en ce que chaque deuxième élément de tôle (4, 14, 134, 154, 214) et chaque tronçon de maintien (3e, 3f, 13e, 13f, 213e, 213f) de chaque premier élément de tôle (3, 13, 133, 143, 213, 443) sont essentiellement plans.

12. Moyen de catalyse selon l'une des revendications 1 à 11, caractérisé en ce que, vu en plan, chaque élément de tôle (3, 4, 13, 14, 63, 64, 133, 134, 143, 213, 214, 443) présente la forme d'un parallélogramme.

13. Moyen de catalyse selon l'une des revendications 1 à 12, caractérisé en ce que, vus en plan, chaque élément de tôle (213, 214) et chaque garniture présentent la forme d'un parallélogramme à angles obliques.

14. Moyen de catalyse selon l'une des revendications 1 à 13, caractérisé en ce que les éléments de tôle (3, 4, 13, 14, 63, 64, 133, 134, 143, 153, 154, 443) sont répartis autour d'un espace vide (89, 451) et entourent ce dernier essentiellement complètement en section transversale, et en ce que les ondulations (3b, 13b, 63b) se développent vers l'extérieur en partant de l'espace vide (89).

15. Moyen de catalyse selon la revendication 14, caractérisé en ce que les éléments de tôle (3, 4, 13, 14, 63, 64, 133, 134, 143, 153, 154, 443) répartis autour de l'espace vide (89) appartiennent à une seule et même garniture en soi fermée.

16. Moyen de catalyse selon la revendication 15, caractérisé en ce que, en section transversale, l'espace vide (89) est au moins en partie délimité par une surface interne (1b, 61b, 81b, 131b), repliée au moins en partie, formée par l'une des bordures internes des éléments de tôle (3, 4, 13, 14, 133, 134, 143), et en ce que les ondulations (3b, 13b) des premiers éléments de tôle (3, 13, 143) se raccordant à un tronçon replié (131f, 131h) de la surface interne (1b, 131b) présentent une hauteur qui croît vers l'extérieur en partant de l'espace vide (89).

17. Moyen de catalyse selon la revendication 15 dans la mesure où celle-ci dépend de l'une des revendications 1 à 10, 12, 13, caractérisé en ce que les éléments de tôle (63, 64) sont au moins partiellement repliés dans une coupe transversale passant par l'espace vide, de telle sorte que la hauteur des ondulations (63b) de tous les premiers éléments de tôle (63) reste essentiellement constante lorsque l'on s'éloigne de l'espace vide en direction de l'extérieur.

18. Moyens de catalyse selon l'une des revendications 1 à 13, caractérisé en ce qu'ils présentent au moins deux garnitures d'éléments de tôle (153, 154, 213, 214, 443), en ce que les deuxièmes éléments de tôle (214) de chaque garniture sont essentiellement plans et parallèles les uns aux autres, en ce qu'il existe un espace vide (221, 451) qui, en section transversale, est au moins en partie délimité par le bord interne des éléments de tôle (153, 154, 213, 214, 443) et en ce que les ondulations (213b) se déploient en s'éloignant de cet espace vide.

19. Moyen de catalyse selon la revendication 18, caractérisé en ce que lorsque les éléments de tôle (443) sont vus en plan, leurs bordures internes sont rectilignes, et en ce que les éléments de tôle (443) appartenant à une même garniture sont décalés angulairement l'un par rapport à l'autre de telle sorte que la surface de la section transversale de l'espace vide (451) diminue dans une direction s'éloignant d'une extrémité de ce dernier.

20. Moyen de catalyse selon l'une des revendications 1 à 19, caractérisé en ce que les éléments de tôle voisins l'un de l'autre (3, 4, 13, 14, 63, 64, 133, 134, 143, 153, 154, 213, 214, 443) reposent l'un contre l'autre par les sommets de leurs ondulations, essentiellement sur toute la longueur de ces dernières, de sorte qu'entre chaque paire d'éléments de tôle voisins l'un de l'autre (3, 4, 13, 14, 63, 64, 133, 134, 143, 153, 154, 213, 214, 443), plusieurs passages (7, 17, 67, 87, 157, 217, 447) entièrement séparés l'un de l'autre sont formés.

21. Procédé de fabrication de moyens de catalyse selon l'une des revendications 1 à 20, caractérisé en ce que des premiers éléments de tôle (3, 13, 63, 133, 143, 153, 213, 443) sont configurés avec un tronçon principal (3a, 13a, 213a) présentant des ondulations (3b, 13b, 63b, 213b) et défini ensuite pour délimiter les passages (7, 17, 67, 87, 157, 217, 447), et avec deux tronçons de maintien (3e, 3f, 13e, 13f, 63e, 63f, 213e, 213f) situés sur des côtés opposés de ce tronçon principal, en ce que des deuxièmes éléments de tôle (4, 14, 64, 134, 154, 214) sont configurés avec un tronçon principal (4a, 14a, 214a) défini ensuite pour délimiter les passages (7, 17, 67, 87, 157, 217, 447), et avec deux tronçons de maintien (4e, 4f, 14e, 14f, 64e, 64f, 214e, 214f) situés sur des côtés opposés de ce tronçon principal, en ce que les tronçons principaux (4a, 14a, 214a) des éléments de tôle (3, 4, 13, 14, 63, 64, 133, 134, 143, 153, 154, 213, 214, 443) sont revêtus d'un revêtement présentant un matériau à action catalytique, en ce que les tronçons de maintien (3e, 3f, 4e, 4f, 13e, 13f, 14e, 14f, 63e, 63f, 64e, 64f, 213e, 213f, 214f) sont maintenus sans revêtement, en ce qu'après l'application des revêtements, on forme au moins une garniture constituée de premiers et de deuxièmes éléments de tôle (3, 4, 13, 14, 63, 64, 133, 134, 143, 153, 154, 213, 214, 443) alternés successifs, en ce que le tronçon de maintien (3e, 3f, 4e, 4f, 13e, 13f, 14e, 14f, 63e, 63f, 64e, 64f, 213e, 213f, 214f) de chaque élément de tôle (3, 4, 13, 14, 63, 64, 133, 134, 143, 213, 214, 443) ne formant pas une extrémité de la garniture ou des garnitures est amené par un tronçon de surface à venir se placer contre un élément d'écartement (5, 15, 65, 135, 145, 155, 215, 305) et par un tronçon de surface non tourné vers ce dernier à venir se placer directement contre un élément de tôle (3, 4, 13, 14, 63, 64, 133, 134, 143, 213, 214, 443) voisin, et en ce que les tronçons de maintien (3e, 3f, 4e, 4f, 13e, 13f, 14e, 14f, 63e, 63f, 64e, 64f, 213e, 213f, 214f) et les éléments d'écartement (5, 15, 65, 135, 145, 155, 215, 445) reposant les uns contre les autres sont soudés les uns aux autres.

22. Procédé selon la revendication 21, caractérisé en ce que l'on prépare un feuillard de tôle servant à former plusieurs éléments de tôle (3, 63, 133, 143, 213, 443), en ce que des éléments d'écartement (5, 65, 135, 145, 155, 215, 445) sont fixés sur le feuillard, en ce que ce dernier est découpé en pièces en même temps que les éléments d'écartement (5, 65, 135, 145, 215, 445), lesquelles pièces forment les éléments de tôle (3, 63, 133, 143, 213, 443) et les éléments d'écartement (5, 65, 135, 145, 215, 445) qui y sont fixés, et en ce que ces éléments de tôle (3, 63, 133, 143, 213, 443) sont empilés les uns sur les autres en même temps que d'autres éléments de tôle (4, 64, 134, 154, 214) pour former la garniture ou une garniture.

23. Procédé selon la revendication 22, caractérisé en ce que la fixation des éléments d'écartement (5, 65, 135, 145, 215, 445) sur le feuillard s'effectue par soudage par points, et en ce qu'après la formation d'une garniture, les tronçons de maintien (3e, 3f, 4e, 4f, 63e, 63f, 64e, 64f, 213e, 213f, 214f) posés les uns contre les autres et les éléments d'écartement (5, 65, 135, 145, 215, 445) sont soudés les uns aux autres essentiellement sur toute la longueur des bordures d'éléments de tôle présentes sur les tronçons de maintien (3e, 3f, 4e, 4f, 63e, 63f, 64e, 64f, 213e, 213f, 214f).
